# EUROPEAN PATENT SPECIFICATION

(11) **EP 4 338 245 B1**
(45) Date of publication and mention of the grant of the patent: **04.03.2026**
(21) Application number: 21726457.1
(22) Date of filing: 11.05.2021
(51) Int. Cl.: H02B 1/36, H02B 11/133

(54) **WITHDRAWABLE UNIT**
EINSCHUBEINHEIT
UNITÉ ENFICHABLE

(43) Date of publication of application: 20.03.2024
(73) Proprietor: Elsteel Denmark A/S, 2990 Nivå (DK)
(72) Inventor: ALEXEEV, Peter, Katunayake 11420 (LK)
(86) International application number: PCT/IB2021/053978
(87) International publication number: WO 2022/238731

(56) References cited:
- CN-A- 110 120 640
- CN-A- 110 571 696
- DE-A1- 102010 011 204
- FR-A1- 3 048 824
- RU-C1- 2 741 065
- US-B2- 9 466 965

## Description

### TECHNICAL FIELD

The present invention relates to the field of electrical power distribution centers and motor control centers, particularly with regard to withdrawable units which can be fully removed from low-voltage switchgear and controlgear assembly, without switching off the assembly.

### BACKGROUND ART

Low-voltage switchgear and controlgear assemblies are intended to be used for distribution of electric power to consumers. The assemblies are internally separated into sections, subsections and compartments depending on the requirements of the end user. There can be three types of compartments in a low-voltage switchgear and controlgear assembly, as per the international standards IEC 61439 i.e., functional unit compartments, busbar compartments and cable compartments. The terminals for external conductors are accommodated in cable compartments. The functional units of a low-voltage switchgear and controlgear assembly are accommodated in functional unit compartments. A functional unit is a drawer-like part of a low-voltage switchgear and controlgear assembly comprising the electrical and mechanical elements including switching devices, conductors connecting a functional unit to the main or distribution busbars and to the terminals for external conductors are part of the functional unit. The functional units of a low-voltage switchgear and controlgear assembly can be of four different types i.e., fixed, plug-in, removable and withdrawable. Each of these units differs from the other in respect of the convenience and usability of inserting and removing out a unit from the low-voltage switchgear and controlgear assembly, without completely shutting down the low-voltage switchgear and controlgear assembly. A withdrawable unit is a functional unit intended to be moved from a connected position to an isolated position and to a test position, while remaining in the functional unit compartment of the low-voltage switchgear and controlgear assembly. When a withdrawable unit is inserted into its functional unit compartment, the male plugs installed inside the withdrawable unit, connects with corresponding female plugs installed inside the functional unit compartment. The withdrawable units contain electrical and mechanical devices which are used to connect and disconnect main circuits and auxiliary circuits. Most of the withdrawable units have three positions - connected position, test position and isolated position. At the connected position the withdrawable unit is fully connected with the main circuits as well as auxiliary circuits. At the test position the main circuit is open, but not necessarily isolated and the auxiliary circuits are connected to allow carrying out test operations, while the withdrawable unit is still inside the functional unit compartment. At the isolated position both the main circuits and the auxiliary circuits are open, while the withdrawable unit still remains in the functional unit compartment.

The low-voltage switchgear and controlgear assembly manufacturers produce withdrawable units with varying features such as locking mechanisms, position indicators, etc... One important concern in today's low-voltage switchgear and controlgear assembly industry is manufacturing easy-to-operate, space saving low-voltage switchgear and controlgear assemblies. Therefore, manufacturing of a compact withdrawable unit, without compromising any of its mandatory basic features and safety requirements in compliance with international standards, has become one of the major goals among the manufacturers. **In** the attempt of designing a compact withdrawable unit, the manufacturers have devised different technologies in the locking and unlocking mechanism at connected, test and isolated positions.

The present invention is a compact withdrawable unit equipped with multiple locking mechanisms in compliance with international standards. The withdrawable unit disclosed in the present invention uses push and hold locking device which locks the withdrawable unit at the test position and the connected position, and is unlocked using a push button. Apart from that the invention uses an isolate lockable mechanism and a final unit release mechanism to enhance the safety of the operators.

The prior art closest to the invention is disclosed in EP2625757-Locking apparatus for withdrawable units for electrical switchgear cabinets - where a different type of locking mechanism operated by a push button is described. Although this invention uses a push button to operate the locking mechanism, the technology used therein is different from the technology used in the invention. The locking mechanism in this prior art uses a locking apparatus of which locking element is displaced by pressing the push button at different locking positions.

The second prior art closer to the invention is disclosed in Patent No. KR101178740B1- A module type motor control center having a drawing position indicating button type device for drawing the unit thereof - where its lock control mechanism locks the unit using rails installed to prevent relative movement or to release the lock. This prior art has a position control mechanism to indicate the position of the unit visually.

The third prior art closer to the invention is disclosed in Patent No. WO/2002/087037- Low voltage switchgear comprising a locking device for an appliance module - where a different locking mechanism is used to lock the unit at different positions. The locking mechanism comprises a locking bar arranged in a housing of the unit, positioning cranks arranged on lateral edges of the bottom of the unit and a lifting gear.

Other know withdrawable units with interlocking mechanisms are disclosed in FR3048824A1, DE102010011204A1, RU2741065C1, CN110571696A, US9466965B2 and CN110120640A.

### TECHNICAL PROBLEM

When it comes to withdrawable units used in a low-voltage switchgear and controlgear assemblies, the size of the withdrawable unit has become one of the important factors in the industry. The low-voltage switchgear and controlgear assembly manufacturers are engaged in continuous research and development work to design compact withdrawable units to minimize the size of a low-voltage switchgear and controlgear assembly. The end users look for compact withdrawable units having high operating currents in order to save space.

Reducing the size of a withdrawable unit is technically a challenging task as the compactness has to be achieved in compliance with IEC 61439 standards. On one hand, a compact withdrawable unit should not compromise the safety requirements expected to be afforded by the overall low-voltage switchgear and controlgear assembly for its operators. The safety of the personnel working around the low-voltage switchgear and controlgear assemblies are one of the most demanding requirements in the industry.

On the other hand, the mechanical operations of the withdrawable unit such as locking mechanisms needs to be isolated from the main objective of the withdrawable unit, i.e. connection and disconnection of internal circuits with incoming and outgoing circuits without shutting down the whole assembly. Since the space inside a withdrawable unit is limited, there should be adequate space inside the withdrawable unit to install electrical components which are used to control and distribution of electrical power.

### DISCLOSURE OF THE INVENTION

The invention is a withdrawable unit, having a drawer like structure, used in low-voltage electrical switchgear and controlgear assembly. The withdrawable unit is improved with multiple locking mechanisms. Its push and hold locking device locks the withdrawable unit automatically at different positions in its functional unit compartment and unlocks the withdrawable unit with the press of the push button. It is also equipped with two more locking mechanisms i.e., isolate lockable mechanism and final unit release mechanism. The withdrawable unit comprises an insertion interlock to prevent accident insertion of the withdrawable unit into a wrong functional unit compartment. The withdrawable unit has provision for position sensor device in order receive an indication of the position of the withdrawable unit.

### ADVANTAGEOUS EFFECTS

In addition to the press and hold locking mechanism, the withdrawable unit consists of two additional locking mechanisms i.e., isolate lockable mechanism and final unit release mechanism. The isolate lockable mechanism can be enabled or disabled depending on the operator's requirement. The operators can safely lock the withdrawable unit using a padlock when carrying out repair or maintenance work. The withdrawable unit can be equipped with a position sensor device to identify at which position the withdrawable unit is, when it is inserted or removed. The withdrawable unit has a special bracket to fix a position sensor device. The insertion interlock protects electrical components installed at the rear side of the withdrawable unit, from accidental insertion of withdrawable unit into a wrong functional unit compartment. The withdrawable unit has been improved in terms of its degree of protection (IP Code) when it is fully connected position.

### BRIEF DESCRIPTION OF DRAWINGS

Drawings do not appear in their correct scale. Some components of the invention are illustrated comparatively larger or smaller than their actual appearance.
Fig. 1 is an illustration of the first variation of the invention, i.e. withdrawable unit and rails.
Fig. 1A is an illustration of the external appearance of the first variation of the invention.
Fig.s 2 and 2A are illustrations of the internal appearance of the withdrawable unit.
Fig.s 3, 3A, 3B and 3C are illustrations of the push and hold locking device. In Fig.s 3B and 3C, the bracket (25b) is not shown in order to illustrate the release pin (22) and the guide bush (22b).
Fig. 4 is an illustration of the upper rail and lower rail.
Fig. 4A is a further illustration of the upper rail.
Fig. 4B is an illustration of the release plate (84) and the longitudinal edge (83) of the upper rail.
Fig. 4C is a further illustration of the lower rail.
Fig. 5 is an illustration of the withdrawable unit (1) when it is fully removed from the functional unit compartment.
Fig.s 6 and 6A are illustrations of the stopping device (70).
Fig.s 7, 7A, 7B and 7C are illustrations of the isolate lockable mechanism (30).
Fig.s 8 and 8A are illustrations of the unit release mechanism (50).
Fig.s 9 and 9A are illustrations of the insertion interlock (110).
Fig. 10 is an illustration of the second variation (120) of the invention, i.e. withdrawable unit (120) with two push and hold locking devices.

### DETAILED DESCRIPTION OF EXEMPLARY EMBODIMENTS OF THE INVENTION

The invention is a withdrawable unit used in low-voltage switchgear and controlgear assemblies, inside which electrical devices are installed to distribute electrical energy and protect equipment and users from electric shock. The withdrawable unit is accommodated in a functional unit compartment in low-voltage switchgear and controlgear assembly. The plugging devices are installed inside the withdrawable unit and in the functional unit compartment to make necessary withdrawable connections and disconnections. When the withdrawable unit is inserted into its compartment in the low-voltage switchgear and controlgear assembly, the male plugging devices mechanically connect with their corresponding female plugging devices allowing the power and control connections coming from internal switching devices installed in the withdrawable unit, to be connected with external cables connected with the outgoing circuit. When the withdrawable unit is removed from its compartment in the low-voltage switchgear and controlgear assembly, the male plugging devices mechanically disconnect with their corresponding female plugging devices and the power connections are disconnected from external cables. The withdrawable unit has locking positions namely connected, test, isolated lockable and unit release, at different locations on its way in and out when it is inserted into and removed from the functional unit compartment. The invention is equipped with a 'push and hold' locking mechanism implemented using multi-functional device operated by a push button to lock and unlock the withdrawable unit at its different locking positions, and to assure proper electrical connections and disconnections. The invention discloses two variations of such withdrawable units in which the difference between the two withdrawable units lies in the number of push and hold locking devices used to unlock the unit at different positions.

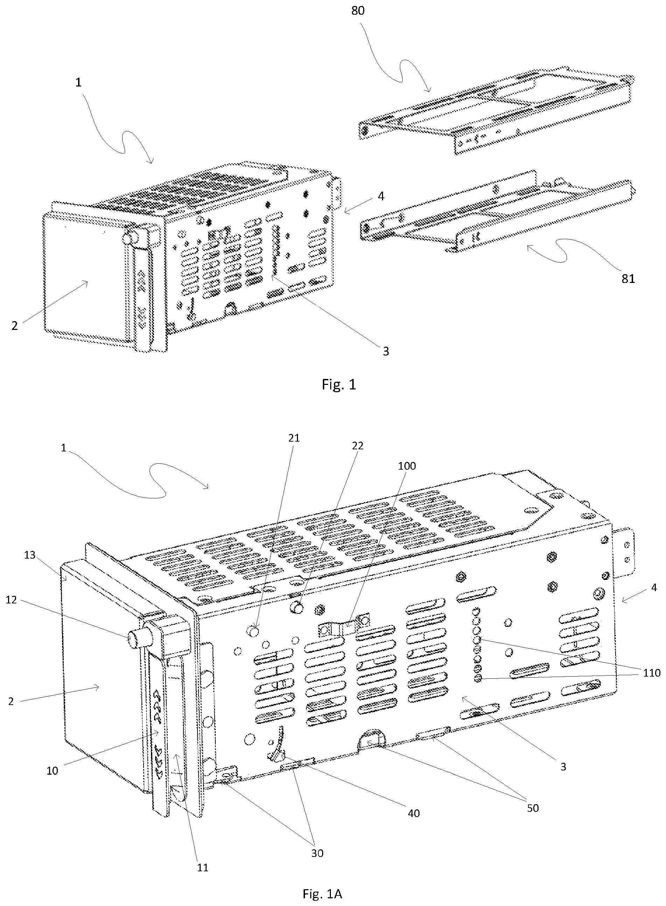

Fig. 1 shows the first variation of the invention which is a comparatively small withdrawable unit (1) having a drawer-like structure and a set of rails (80 and 81) made from sheet metal. For the ease of description, three sides of the withdrawable unit (1) are referenced as front side (2), right side (3) and rear side (4) of the withdrawable unit (1); the direction of movements, i.e. forward and backward referred in the below description, are in relative to the functional unit compartment. Forward movement means moving of the withdrawable unit or a component of it towards the front side of the functional unit compartment. Backward movement means moving of the withdrawable unit or a component of it towards the rear side of the functional unit compartment.

As further shown in Fig. 1A, the withdrawable unit (1) is externally comprised with operating handle (10), gasket (11), push button (12) and front door (13) in its front side (2). The withdrawable unit (1) is comprised with a lock pin (21), release pin (22), isolate lockable mechanism (30), enable/disable mechanism (40), unit release mechanism (50), position sensor bracket (100) and insertion interlock (110).

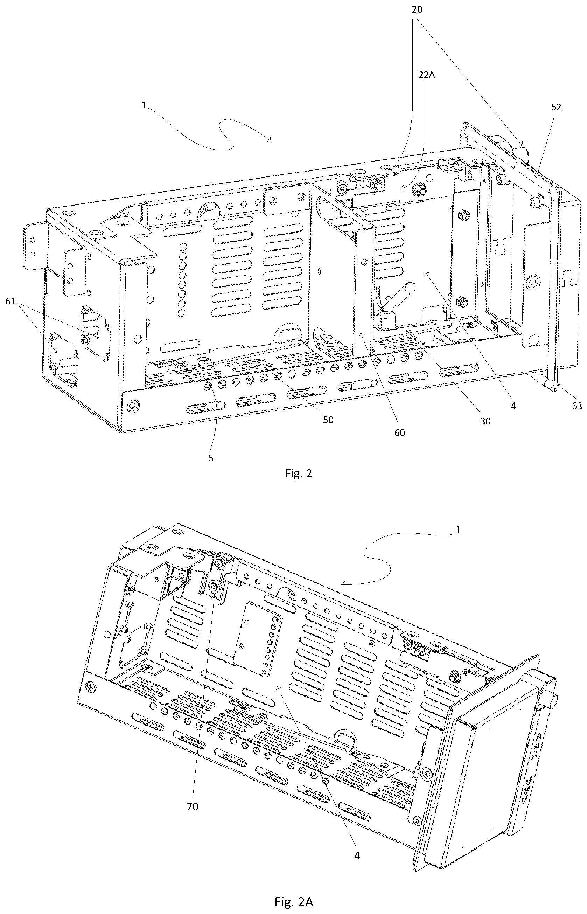

As shown in Fig. 2, there is a mounting plate (60) fixed inside the withdrawable unit (1) to mount electrical devices. Cutouts (61) for plugs are made in the rear side (4) of the withdrawable unit (1). A collar gasket (62) is affixed to the back of the door holding plate (63) of the withdrawable unit (1). The gasket (11) shown in Fig. 1 seals the end of the operating handle (10). The two gaskets (11 and 62) avoid entrance of water and dust into the withdrawable unit (1) when the withdrawable unit (1) is fully inserted into the functional unit compartment. Thus, the degree of protection (IP code) of the withdrawable unit (1) is improved. The locking and unlocking of the withdrawable unit (1) at connected and test positions are achieved by means of push and hold locking device (20) fixed inside, on the right sidewall (3) of the withdrawable unit (1). The isolate lockable mechanism (30) and unit release mechanism (50) are fixed on to the bottom (5) of the withdrawable unit (1). As shown in Fig. 2B, stopping device (70) is also fixed inside, on the right sidewall (3) of the withdrawable unit (1).

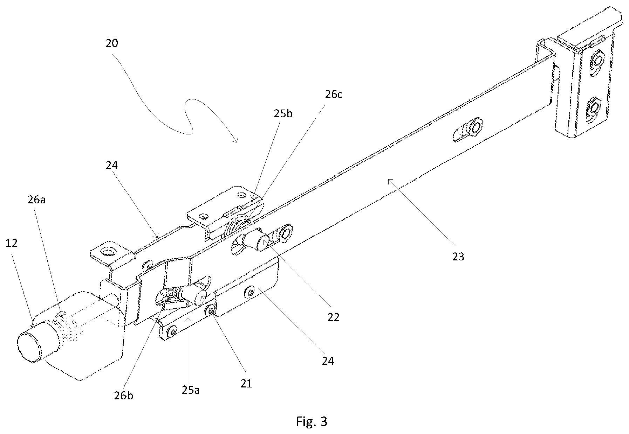

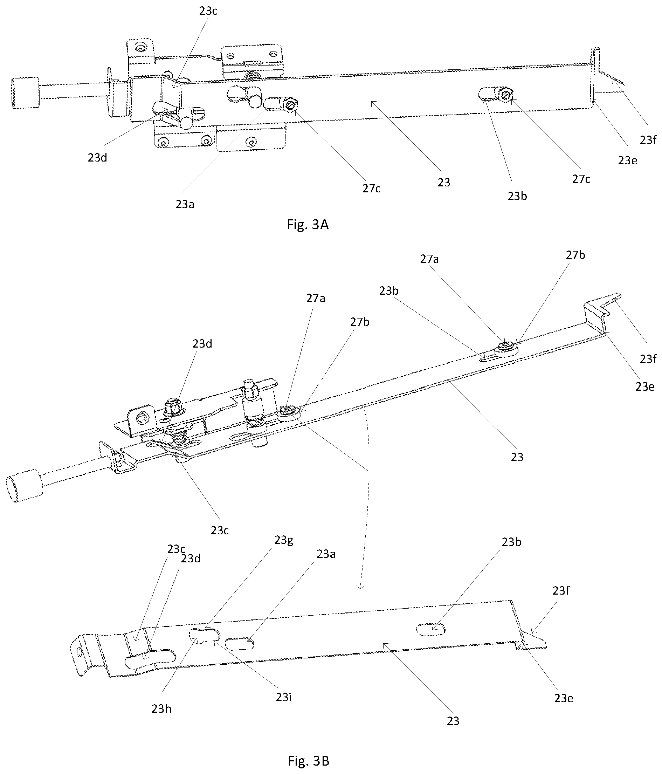

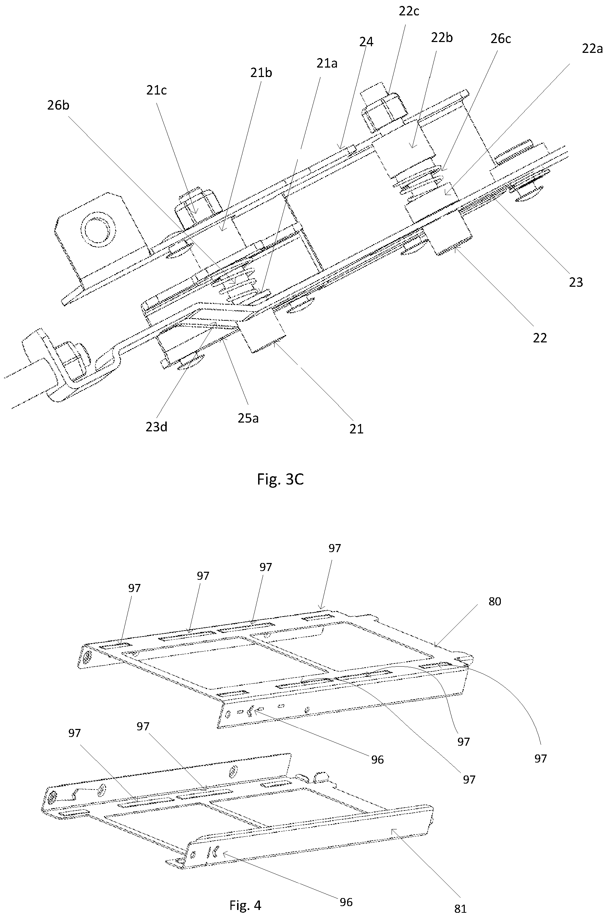

As shown in Fig. 3, push and hold locking device (20) is comprised with the push button (12), lock pin (21), release pin (22) and a movable plate (23). The lock pin (21) is internally fixed to the bracket (25a) which is fixed to the inside right sidewall (3) of the withdrawable unit (1). The release pin (22) is internally fixed to the bracket (25b) which is fixed to the inside top wall of the withdrawable unit (1). A mechanism cover plate (24) covers the operation of the lock pin (21) and the release pin (22). The push button (12), the lock pin (21) and the release pin (22) are loaded with springs (26a, 26b and 26c) respectively. The force of the spring (26a) is greater that the strength of the spring (26b) or the spring (26c).

As shown in Fig. 3A and Fig. 3B, the movable plate (23) is a metal plate fixed internally to the right sidewall (3) of the withdrawable unit (1) using screws (27a), spacers (27b) and press standoff (27c), allowing the movable plate (23) to be moved freely forward and backward through guide slots (23a and 23b). Closer to the end of the movable plate (23) where the push button (12) is fixed, has a tapered bend (23c) with a tapered guide slot (23d). Closer to the other end of the movable plate (23) has a right-angled bend (23e) with a trigger (23f) which is used to operate the stopping device (70), i.e. to move the stopping device (70) up and down, which is described in paragraph 3 on page 13. The movable plate (23) has a keyhole-type slot (23g) located in between the tapered guide slot (23) and the first guide slot (23a). The guide slots (23a and 23b), tapered guide slot (23d) and the keyhole-type slot (23g) are located in three different levels on the movable plate (23). The guide slots (23a and 23b) are located in the same level. The keyhole-type slot (23g) has two sections, i.e. Section A (23h) which is circular and Section B (23i) which is an ob-round.

As shown in Fig. 3C, the lock pin (21) has a collar (21a) and it goes through the spring (26b), the bracket (25a), guide bush (21b) and the mechanism cover plate (24). The guide bush (21b) is riveted to the bracket (25a). The spring (26b) is held between the bracket (25a) and the collar (21a) of the lock pin (21). The lock pin (21) is fixed slightly spring-loaded using a nut (21c) to freely move inside the guide bush (21b). Thus, the arrangement of the mechanism cover plate (24), the spacer (21b), bracket (25a) and the spring (26b) allow the lock pin (21) to be pressed or released. The width of the tapered guide slot (23d) is slightly greater than the diameter of the head of the lock pin (21) enabling it to come out through the tapered guide slot (23d). The diameter of the collar (21a) is slightly greater than the diameter of the head of the lock pin (21) enabling it to rest at the edge of the tapered guide slot (23d).

As shown in Fig. 3, 3A, 3B and 3C, the release pin (22) has a step (22a) and it goes through the spring (26c), the bracket (25b), guide bush (22b) and the mechanism cover plate (24). The guide bush (22b) is riveted to the bracket (25b). The spring (26c) is held between the bracket (25b) and the step (22a) of the release pin (22). The release pin (22) is fixed and slightly spring-loaded using nut (22c) to freely move inside the guide bush (22b). Thus, the arrangement of the mechanism cover plate (24), the spacer (22b), the bracket (25b) and the spring (26c) allow the release pin (22) to be pressed or released. The head of the release pin (22) passes through the keyhole-type slot (23g) on the movable plate (23) and becomes further spring-loaded and pressed when its step (22a) is hit and rested at inside edge of the Section B (23i) of the keyhole-type slot (23g). The width of the Section B (23i) of the keyhole-type slot (23g) is slightly greater than the diameter of the head of the release pin (22) enabling it to come out through the Section B (23i) of the keyhole-type slot (23g). The diameter of the step (22a) is slightly greater than the diameter of the head of the release pin (22) enabling it to rest at the inside edge of the Section B (23i) of the key hole type slot (23g). The diameter of the step (22a) of the release pin (22) is slightly lower than the diameter of the Section A (23h) of the keyhole-type slot (23g) enabling the release pin (22) to come out through Section A (23h), allowing the spring (26c) to extend its original state.

The pressing or/and releasing of the lock pin (21), the release pin (22) or/and the push button (12) are operated in association with the forward and backward movement of the movable plate (23) as described in the following two paragraph 2 and 3 on page 9.

When the movable plate (23) moves backward in relative to the lock pin (21), it (21) is fully spring-loaded and pressed as the backward movement of the taper in the tapered guide slot (23d) moves the collar (21a) of the lock pin (21) inwards. When the movable plate (23) moves backward in relation to the release pin (22), the Section A (23h) of the keyhole-type slot (23g) moves to the location of the release pin (22). As a result, the step (22a) of the release pin (22) comes out through the Section A (23h) of the keyhole-type slot (23g) as it (22) is spring-loaded by the spring (26c) and holds the further movement of the movable plate (23). As a result, the push button (12) is kept pressed and the spring (26c) is kept loaded. Thus, the release pin (22) is released when the movable plate (23) moves backward in relative to the release pin (22).

When the release pin (22) is pressed inwards by any means, the step (22a) of the release pin (22) is moved inwards and allow the movable plate (23) to be moved forward by the loaded spring (26a), by which the push button (12) is released from its pressed state. The forward movement of the movable plate (23) brings the Section B (23i) of the keyhole-type slot (23g) to the location of the release pin (22). As result, the step (22a) hits and rests at the inside edge of the Section B (23i) of the key hole type slot (23g), Thus the release pin (22) becomes pressed. When the movable plate (23) is moved forward, the tapered guide slot (23d) moves forward relative to the lock pin (21) and releases the lock pin (21).

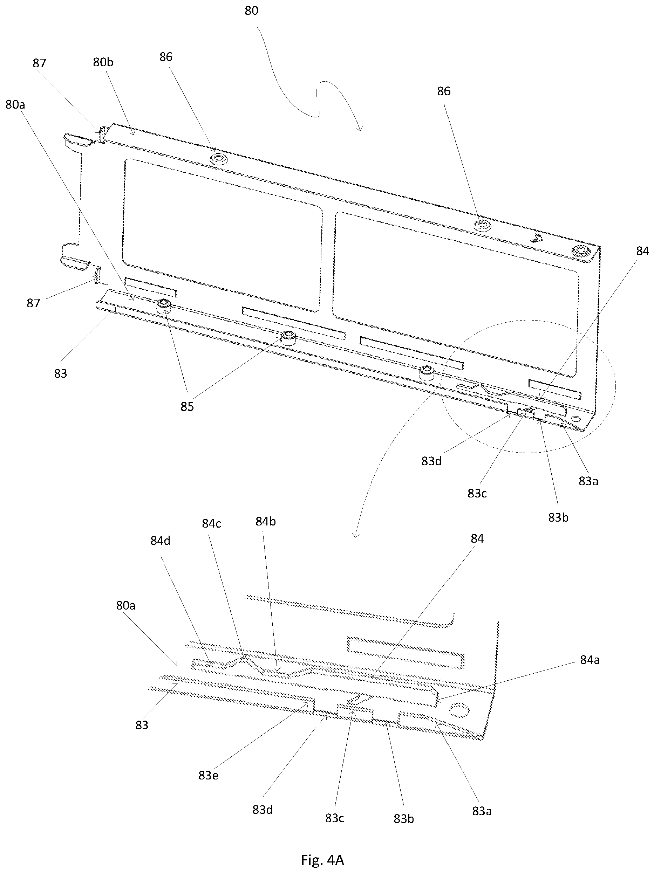

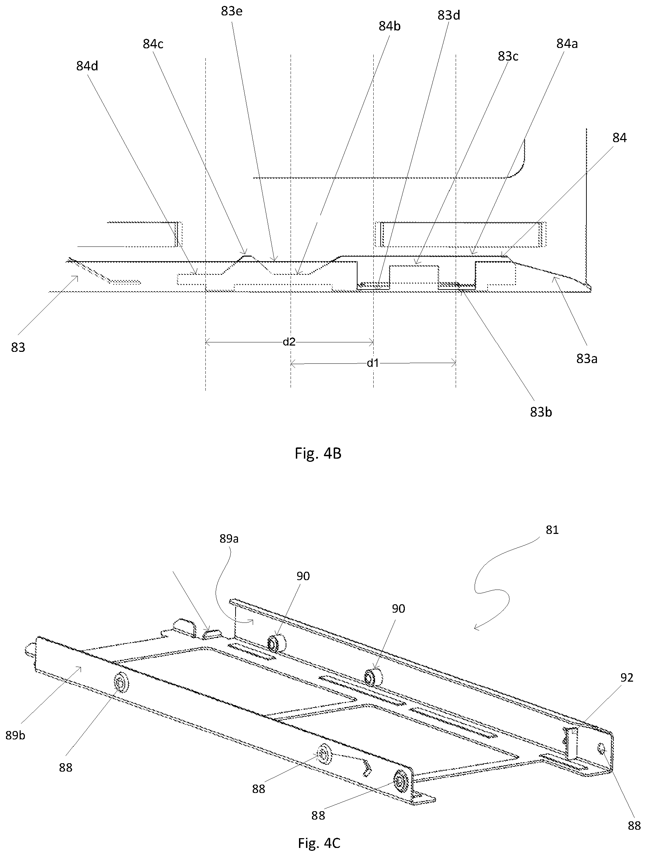

As shown in Fig. 4, the rails, i.e. upper rail (80) and lower rail (81) are used to guide and accommodate the withdrawable unit (1) in its functional unit compartment of a controlgear and switchgear assembly. The front side of each rail (80 and 81) is identified by a debossed arrow (96). The inside surfaces of all rails, which touch with the moving withdrawable unit (1), have embossed surfaces (97) to reduce the friction generated between the withdrawable unit (1) and the rails (80 and 81) when the withdrawable unit (1) is moved.

As shown in Fig. 4A, the upper rail (80) is a metal plate of which the two longitudinal edges (80a and 80b) are bended at right angle. The longitudinal edge (80a) is the side where the push and hold locking device (20) is fixed to the withdrawable unit (1). The longitudinal edge (80a) is further bended at right angle to make the longitudinal edge (83) with a tapered tab (83a), two rectangular dips (83b and 83d), a rectangular tab (83c) in between two dips (83b and 83d) and a long edge (83e). The release plate (84) is a metal plate fixed on the longitudinal edge (80a). The release plate (84) is formed with a tapered tab (84a), a tapered dip (84b), triangular shaped tab (84c) and a one-side opened tapered dip (84d). The longitudinal edge (80a) of the upper rail (80) has two guide bushes (85) with a riveted steel ball. The riveted steel ball in the guide bush (85) is rotatable inside the guide bush (85). The upper rail (80) is fixed to frame members in the functional unit compartment using screws inserted through fixing holes (86). The upper rail (80) has two unit-stoppers (87) which are used to stop the withdrawable unit (1) moving into the unit compartment in case of failure at the connected position and damaging the plugging components.

As shown in Fig. 4B, the two dips (83b and 83d) are equal in dimensions. The long edge (83e) and the tapered tab (83a) are in equal height. The height of the rectangular tab (83c) is slightly lower than the height of the long edge (83e) or the tapered tab (83a). Thus, the long edge (83e) and the rectangular tab (83c) are in two different levels. The projected linear distance d1 mm between the mid-point of dip (83b) and the mid-point of dip (84b) is equal to the projected linear distance d2 mm between the mid-point of dip (83d) and the mid-point of dip (84d).

As shown in Fig. 4C, the lower rail (81) is fixed to frame members in the functional unit compartment using screws inserted through fixing holes (88) on the longitudinal edges (89a and 89b) bended at right angle. The longitudinal edge (89a) of the lower rail (81) has two guide bushes (90) with riveted steel ball rotatable inside the guide bush (90). The lower rail (81) has two unit stoppers (91) to finally stop the withdrawable unit (1) moving into the unit compartment in case of failure at the connected position and damaging the plugging components. The lower rail (81) has a blocking tab (92) on the longitudinal edge (89a), closer to its front end.

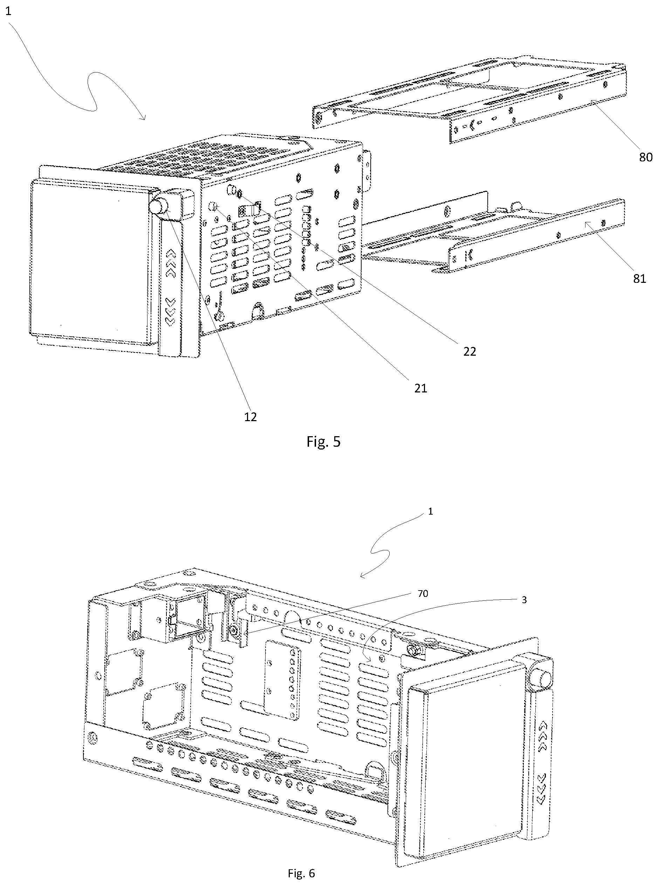

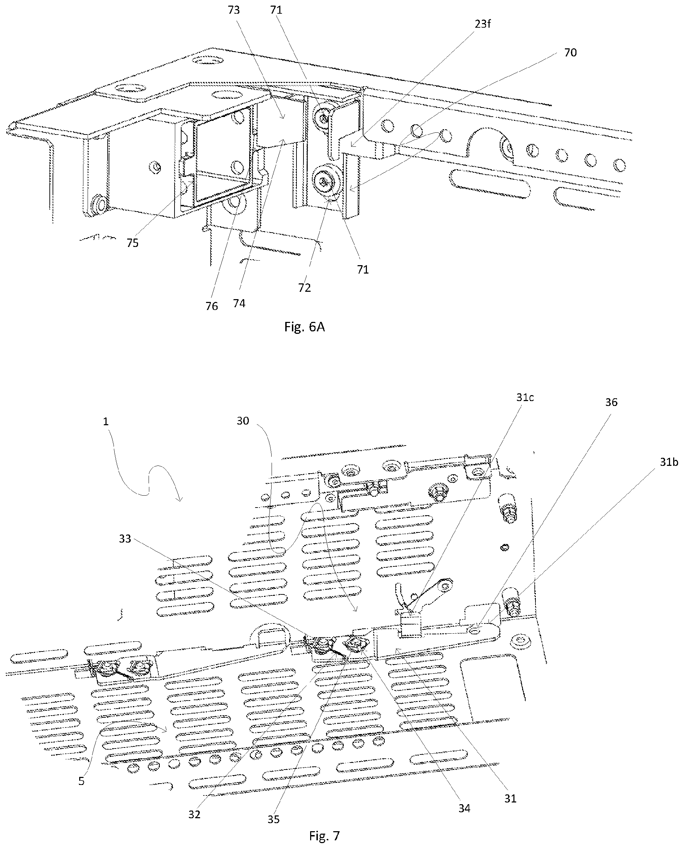

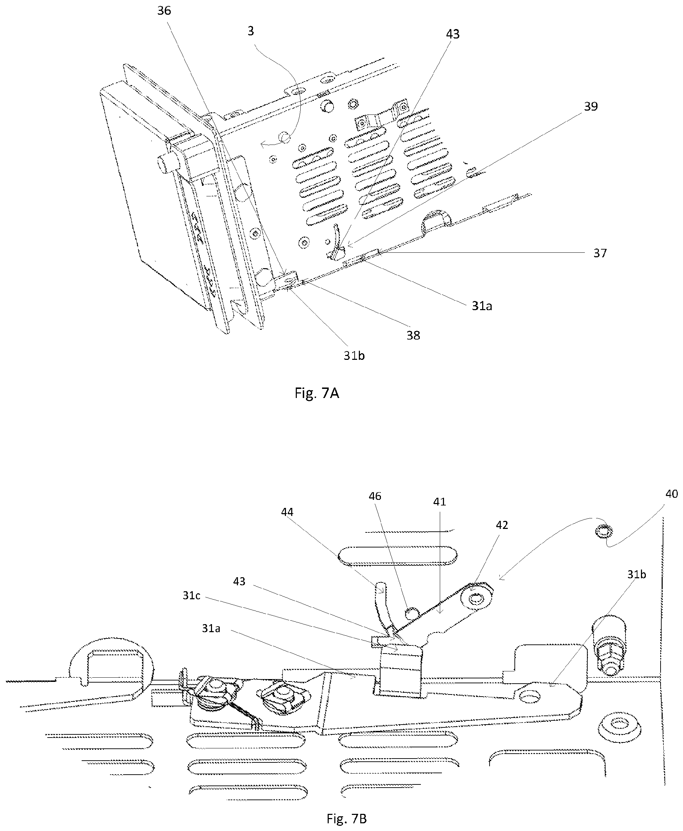

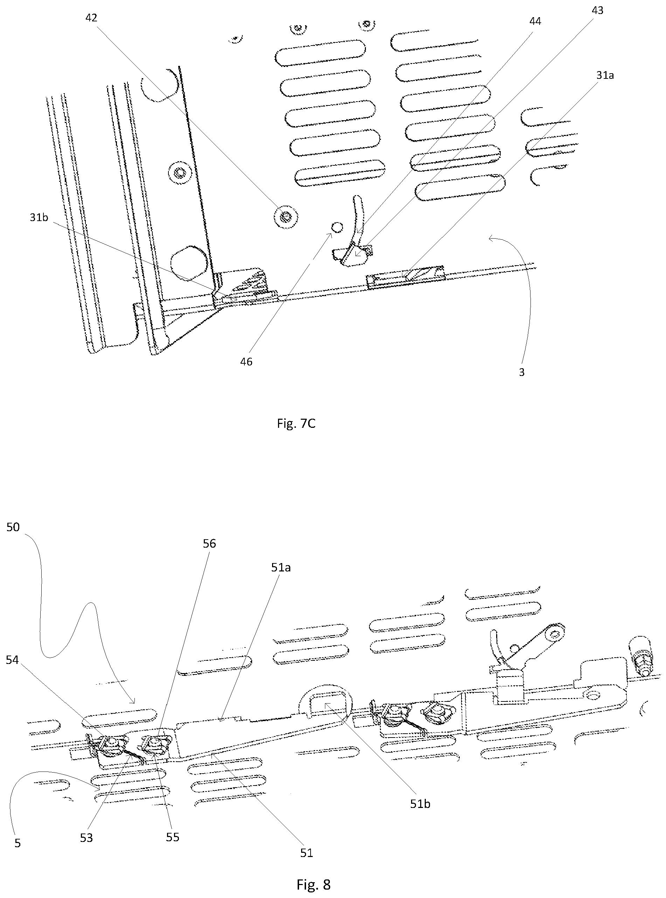

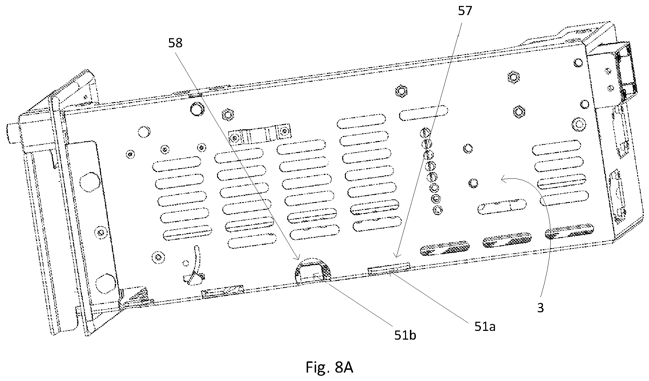

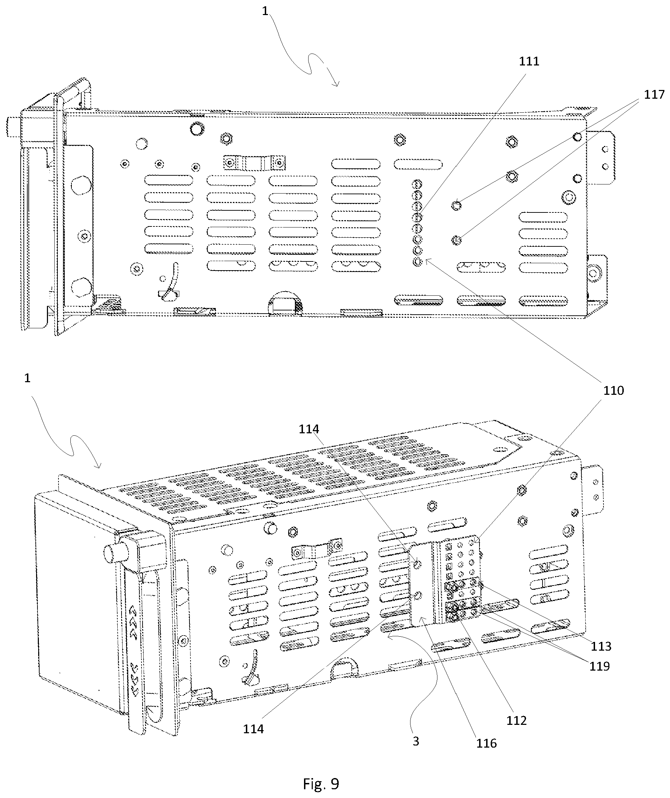

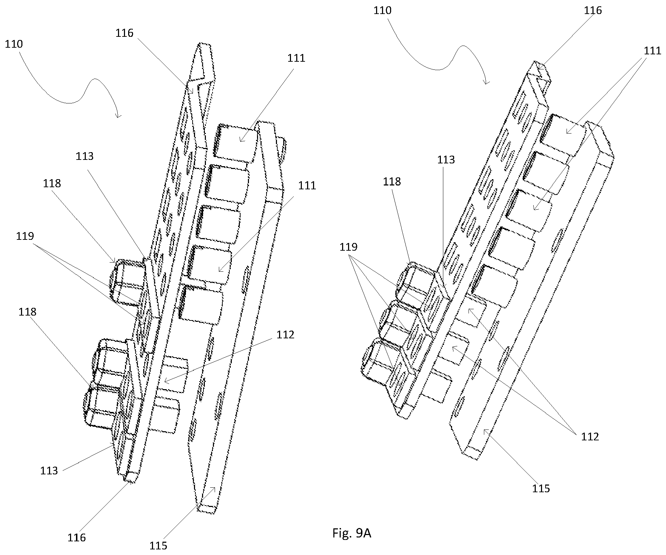

As shown in Fig. 5 and with reference to Fig.s 3, 3A, 3B, 3C, 4A and 4B, when the withdrawable unit (1) is completely removed from its compartment, the push button (12) is in the released state; the lock pin (21) is in the released state in the tapered guide slot (23d); and the release pin (22) is in the pressed state in the Section B (23i) of the keyhole-type slot (23g). Thus, the push button (12), the lock pin (21) and the release pin (22) are in their default states.

When the withdrawable unit (1) is inserted into its compartment, firstly the lock pin (21) hits the tapered tab (83a) and is partially pressed by the tapered tab (83a). Once the lock pin (21) reaches the rectangular dip (83b), the lock pin (21) comes to its released state as it is spring loaded, and gets locked in the rectangular dip (83b). Simultaneously, the release pin (22) reaches the tapered dip (84b) on the release plate (84). Thus, the withdrawal unit (1) gets locked at the test position when it is inserted into the functional unit compartment. The withdrawal unit (1) cannot be moved forward or backward as the lock pin (21) is locked in the rectangular dip (83b).

In order to unlock the withdrawal unit (1) at the test position, the push button (12) is pressed. When the push button (12) is pressed, the movable plate (23) moves backward, pressing the lock pin (21) inwards by the backward movement of the tapered guide slot (23d) on the tapered bend (23c). When the push button (12) is fully pressed, the lock pin (21) comes to fully pressed state where the lock pin (21) is no longer locked by the rectangular dip (83b). Simultaneously, the backward movement of the movable plate (23) carries the keyhole-type slot (23g) backward relative to the release pin (22). As a result, the Section A (23h) of the keyhole-type slot (23g) is brought to the location of the release pin (22). When the Section A (23h) reaches the release pin (22), the release pin (22) gets released through the Section A (23h) of the keyhole-type slot (23g) on the movable plate (23), since the release pin (22) is spring loaded. The movable plate (23) is held by the step (22a) of the release pin (22). As a result, the push button (12) becomes spring-loaded and is held in the pressed state. The guide slots (23a and 23b) support the movable plate (23) to move forward and backward relative to the withdrawable unit (1). Thus, by pressing the push button (12) at the test position, the withdrawable unit (1) is unlocked as the lock pin (21) is released and the release pin (22) is pressed simultaneously. Thereafter, the withdrawable unit (1) can be pushed towards the connected position or pulled out until unit release mechanism stops the withdrawable unit (1).

After having pressed the push button (12) at the test position, when the withdrawable unit (1) is pushed in from the test position, the release pin (22) hits the triangular-shaped tab (84c), and is pressed by the triangular-shaped tab (84c). As a result, the step (22a) of the release pin (22) is moved inwards and allow the movable plate (23) to move forward and brings the push button (12) from its pressed state to released state, by the loaded spring (26a). The forward movement of the movable plate (23) brings the Section B (23i) of the keyhole-type slot (23g) to the location of the release pin (22) and the step (22a) hits and rests at the inside edge of the Section B (23i) of the key hole type slot (23g), while the tapered guide slot (23d) moves forward relative to the lock pin (21). Thus, the lock pin (21) becomes released, the release pin (22) becomes pressed and the push button becomes released as soon the withdrawable unit (1) is pushed in towards the connected position from the test position.

After having pressed the push button (12) at the test position, if the withdrawable unit (1) is pulled out, the release pin (22) hits the tapered tab (84a) and is pressed by the tapered tab (84a). Once the release pin (22) is pressed inwards, the operation described in the above paragraph 3 on page 9 occurs, releasing the lock pin (21) and the push button (12).

When the withdrawable unit (1) is moved from the test position to the connected position, the operation described in paragraph 1 of page 12 occurs and then the lock pin (21) passes the rectangular tab (83c) and gets locked in the rectangular dip (83d) while the release pin (22) remains pressed and reaches the one-side opened tapered dip (84d); thereby, the withdrawable unit (1) gets locked at the connected position.

In order to unlock the withdrawal unit (1) at the connected position, the push button (12) is pressed. When the push button (12) is pressed, the movable plate (23) moves backward relative to the withdrawable unit (1), pressing the lock pin (21) inwards by the backward movement of the tapered guide slot (23d) on the tapered bend (23c) on the movable plate (23). When the push button (12) is fully pressed, the lock pin (21) comes to fully pressed state where the lock pin (21) is no longer locked by the rectangular dip (83d). Simultaneously, the backward movement of the movable plate (23) carries the keyhole-type slot (23g) backward relative to the release pin (22). As a result, the step (22a) of the release pin (22) is released through the Section A (23h) of the keyhole-type slot (23g) on the movable plate (23) as described in paragraph 2 on page 9. Furthermore, the push button (12) becomes spring loaded and is held in the pressed state. Thus, by pressing the push button (12) at the connected position, the withdrawable unit (1) is unlocked as the lock pin (21) is released and the release pin (22) is pressed simultaneously. Thereafter, the withdrawable unit (1) can be pulled out from the connected position to the test position.

After having pressed the push button (12) at the connected position and as soon as the withdrawable unit (1) is pulled out from the connected position, the release pin (22) hits the triangular-shaped tab (84c), and is pressed by the triangular-shaped tab (84c). As a result, the step (22a) of the release pin (22) is pushed inwards and the movable plate (23) moves forward and brings the push button (12) from its pressed state to released state, by the spring (26a). The forward movement of the movable plate (23) moves the Section B (23i) of the keyhole-type slot (23g) to the location of the release pin (22) and the tapered guide slot (23d) moves forward relative to the release pin (22) and the lock pin (21) respectively, whereby the step (22a) hits and rests at the inside edge of the Section B (23i) of the key hole type slot (23g). Thus, the lock pin (21) becomes released, the release pin (22) becomes pressed and the push button becomes released as soon the withdrawable unit (1) passes the connected position to the test position.

When the withdrawable unit (1) is further pulled out, the lock pin (21) meets the rectangular dip (83b) and gets released while the release pin (22) is still in the pressed state; thereby the withdrawable unit (1) gets locked at the test position when it is pulled out from connected position. In order to unlock the withdrawal unit (1) at the test position, the push button (12) is pressed. When the push button (12) is pressed, the lock pin (21) is pressed; and the release pin (22) is released allowing the withdrawable unit to be further pulled out.

As shown in Fig.s 6 and 6A, the stopping device (70) is a gravity loaded device used to control the movement of a spring-loaded control plug holder (75) with a tab (76), fixed to the rear side of the withdrawable unit (1). The stopping device (70) is fixed to the right sidewall (3) of the withdrawable unit (1) using screws (71) inserted through plastic spacers and slots (72) allowing it (70) to be moved up or down by the trigger (23f) of the movable plate (23). A control plug stopper (73) of the stopping device (70) extends towards the rear side (4) of the withdrawable unit (1) and has a tapered bottom edge (74). In withdrawable units, male and female parts of control plug need to be properly connected at the test position and such connection should be maintained while the withdrawable unit is being moved between the test position and the connected position. The plugging load which exerts forward at the time of making the connection, needs to be stopped to establish a proper connection at the test position. By default, the stopping device (70) is at its lower-most position, on the tapered edge of the trigger (23f), blocking the tab (76) of the spring-loaded control plug holder (75), while the push button (12) is in the released state. Thus, the control plug stopper (73) of the stopping device (70) stops the forward movement of the spring-loaded control plug holder (75) fixed to the rear side (4) of the withdrawable unit (1), as the tab (76) of the spring-loaded control plug holder (75) hits and gets blocked by the control plug stopper (73). When the push button (12) is pressed, the stopping device (70) is lifted up along the tapered edge (23f) of the trigger (23) and the control plug stopper (73) of the stopping device (70) moves up, unblocking the tab (76) of the spring-loaded control plug holder (75). Once the tapered bottom edge (74) of the control plug stopper (73) is lifted above the level of the tab (76), it (76) comes under the tapered bottom edge (74); thereby, the spring-loaded control plug holder (75) is no longer blocked and is freely movable forward or backward with the forward or backward movement of the withdrawable unit (1); even the tapered bottom edge (74) of control plug stopper (73) rests on the tab (76), the spring-loaded control plug holder (75) can be freely moved. When the push button (12) is released, the trigger (23f) moves forward and the stopping device (70) moves downward on the tapered edge of the trigger (23f), due the weight of the stopping device (70).

As described in the paragraph 1 on page 11 when the withdrawable unit (1) is at the test position and the push button is released, the spring-loaded control plug holder (75) is blocked by the control plug stopper (73); when the withdrawable unit (1) is at the test position and the push button is pressed, the spring-loaded control plug holder (75) is not blocked by the control plug stopper (73) and is freely movable. When the withdrawable unit (1) moves from the test position to the connected position, the push button gets released and the stopping device moves down where the tapered bottom edge (74) of the control plug stopper (73) rest on the tab (76); thus, the spring-loaded control plug holder (75) is not blocked. When the withdrawable unit (1) is in the connected position, the spring-loaded control plug holder (75) reaches it is maximum towards the front where the tab (76) comes forward beyond the tapered bottom edge (74) of the control plug stopper (73). When the withdrawable unit (1) is unlocked and moved from the connected position to the test position, the spring-loaded control plug holder (75) moves backward lifting the control plug stopper (73) up by the tab (76) due to the tapered bottom edge (74) being resting on the tab (76). When the withdrawable unit (1) is unlocked and moved from the connected position to the test position, the spring-loaded control plug holder (75) reaches its maximum towards the back; the tab (76) passes the tapered bottom edge (74) allowing the control plug stopper (73) to move further downward and block the spring-loaded control plug holder (75) again at the test position. The above movement of the control plug holder (75) is described in relative to the forward and backward movement of the withdrawable unit (1) from the test position to connected position and vice versa.

In addition to the withdrawable unit (1) being locked at the connected position and the test position, it is provided with two additional locking mechanisms, i.e. isolate lockable mechanism (30) and unit release mechanism.

As shown in Fig.s 7 and 7A, the isolate lockable mechanism (30) is operated by a locking arm (31) with a locking tab (31a), an operating point (31b) and an enable/disable tab (31c); all of which are cut and bent from a single sheet of metal. The locking arm (31) is spring loaded with a spring (32) and is fixed to the bottom (5) of the withdrawable unit (1) by a pin (33) enabling the locking arm (31) to be pivoted around the pin (33). There is a slot (34) on the locking arm (31) which is used to limit the movement of the locking arm (31) with the help of pin (35). The two pins (33 and 35) are fixed using circlips. The rear edge of the locking tab (31a) is tapered while the front edge is straight. The operating point (31b) has a lock hole (36). The right sidewall (3) has a cutout (37) for the locking tab (31a), a cutout (38) for the operating point (31b) and a cutout (39) for the enable/disable tab (31c). The locking arm (31) is fixed to the withdrawable unit (1) and spring-loaded in a manner where the locking tab (31a), the operating point (31b) and the enable/disable tab (31c) come out through the cutouts (37, 38 and 39) respectively.

As shown in Fig.s 7B and 7C, the isolate lockable mechanism (30) is provided with an enable/disable mechanism (40). This mechanism (40) is used to enable or disable the isolate lockable mechanism (30). The enable/disable mechanism (40) consists of a switch (41) fixed inside the right sidewall (3) of the withdrawable unit (1) by a rivet (42). The switch (41) can be moved up or down as it is pivotable around the rivet (42). There is a semi punch (46) made on the right sidewall (3) of the withdrawable unit (1) to stop the switch (41) falling down accidently due to vibration or any other reason, when the isolate lockable mechanism (30) has been enabled. One end of the switch (41) is bent to have a step-up end (43) so that it can be passed through a curve-shaped slot (44) on the right sidewall (3) of the withdrawable unit (1). Thus, the isolate lockable mechanism (30) is enabled or disabled by slightly pressing the step-up end (43) inwards and moving the switch (41) up or down. When the switch (41) is fully moved down, it blocks the entrance of the enable/disable tab (31c) through the cutout (39) in the right sidewall (3) of the withdrawable unit (1); thus, the isolate lockable mechanism (30) is disabled as the locking tab (31a) and the operating point (31b) are kept inside the right sidewall (3) of the withdrawable unit (1). When the switch (41) is moved up, it unblocks the entrance of the enable/disable tab (31c) through the cutout (39) and allows the enable/disable tab (31c) to pass through the slot (39); thus, the isolate lockable mechanism (30) is enabled as the locking tab (31a) and the operating point (31b) stay outside of the right sidewall (3) of the withdrawable unit (1).

Whenever a maintenance or repair needs to be done in the outgoing cables or other equipment connected to the switchgear and controlgear assembly, the withdrawable unit (1) is pulled out until the isolate lockable mechanism (30) comes out from the functional unit compartment and the isolate lockable mechanism (30) is enabled by slightly pressing inwards the step-up end (43) of the enable/disable mechanism (40) and moving the switch (41) up in the curved slot (44). Then, the withdrawable unit (1) is inserted until the locking tab (31a) passes the blocking tab (92) where the tapered edge of the locking tab (51a) hits and passes the blocking tab (92) without any additional intervention. The withdrawable unit is pulled out until the front edge of the locking tab (31a) hits and stops at the blocking tab (92) on the lower rail (81), where the withdrawable unit (1) cannot be pulled out, but can be pushed in until the withdrawable unit (1) gets locked at the test position. When the withdrawable unit (1) is blocked by the blocking tab (92), the operating point (31b) is pressed inwards by a finger and the withdrawable unit (1) is pulled out in order to remove the withdrawable unit (1). When the locking tab (31a) is blocked by the blocking tab (92), a padlock can be inserted through lock hole (36) to lock the withdrawable unit (1) at the isolate lockable position where the withdrawable unit (1) is fully disconnected from incoming and outgoing circuits. When the isolate lockable mechanism (30) is locked by a padlock, the withdrawable unit (1) cannot be pushed in, which prevents the withdrawable unit (1) accidently being pushed in to the functional unit compartment. After finishing the maintenance work, the padlock is removed and the operating point (31b) is pressed inwards by a finger to pull out or insert the withdrawable unit (1). Thus, it provides additional safety for the technicians who are carrying out maintenance work.

When the withdrawable unit (1) is being removed from its functional unit compartment, it finally gets locked automatically by the unit release mechanism. As shown in Fig.s 8 and 8A, the unit release mechanism (50) is operated by a locking arm (51) with a locking tab (51a) and an operating point (51b), all of which are cut and bent from a single sheet of metal. The locking arm (51) is spring loaded with a spring (53) and is fixed to the bottom (5) of the withdrawable unit (1) by a pin (54) enabling the locking arm (51) to be pivoted around the pin (54). There is a slot (55) on the locking arm (51) which is used to limit the movement of the locking arm (51) with the help of pin (56). The two pins (54 and 56) are fixed using circlips. The rear edge of the locking tab (51a) is tapered while the front edge is straight. The right sidewall (3) has a cutout (57) for the locking tab (51a) and a cutout (58) for the operating point (51b) on bottom of the right sidewall (3) of the withdrawable unit (1). The locking arm (51) is fixed to the withdrawable unit (1) and spring loaded in a manner where the locking tab (51a) and operating point (51b) come out through the cutouts (57 and 58) respectively. When the withdrawable unit (1) is pulled out from the functional unit compartment, locking tab (51a) of the locking arm (51) hits and stops at the blocking tab (92) on the lower rail (81) with reference to Fig. 4C. In order to unlock and fully remove the withdrawable unit (1), the operating point (51b) is pressed inwards by a finger and the withdrawable unit (1) is pulled out. It provides additional safety when fully removing the withdrawable unit (1) from the functional unit compartment. In the absence of such locking mechanism, there is a high risk of falling the withdrawable unit down and injure the operator. When the withdrawable unit (1) is inserted to the functional unit compartment, the tapered edge of the locking tab (51a) hits and is pressed inside by the blocking tab (92) without any additional operation.

When the withdrawable unit is completely removed from the functional unit compartment and inserted again, the withdrawable unit (1) gets locked at the test position provided that the push button (12) is in its default state, i.e. released state. When the push button (12) is pressed, the lock pin (21) is in the pressed state and the release pin (22) is in the released state. In case the withdrawable unit (1) is inserted into the functional unit compartment while the push button is pressed, the release pin (22) hits the tapered tab (84a) and prevent the withdrawable unit (1) being further inserted into the functional unit compartment. In such case, the withdrawable unit is pulled out and the release pin (22) is pressed by a finger to bring the lock pin (21) and the push button (12) to released state, i.e. the withdrawable unit is brought to the default state, by means of the operation described in paragraph 3 of page 9

As shown in Fig.s 9 and 9A, the withdrawable unit (1) has an insertion interlock (110) implemented using different arrangements of slotted rounded pins (111) and square pins (112). The slotted rounded pins (111) are fixed to a bracket (115) with threaded holes to make a certain arrangement of slotted rounded pins (111). The slots on the slotted rounded pins (111) are used to fix the pins (111). The bracket (115) is fixed inside the right sidewall (3) of the withdrawable unit (1) by two screws (117) in a manner where the slotted rounded pins (111) come out through the holes on the right sidewall (3) of the withdrawable unit (1). The square pins (112) are first fixed to a plate (113) having three rounded holes (119) in a row, by lock nuts (118). A bracket (116) having a square hole and two rounded holes in each row is used to fix the plate (113) with the square pin (112). Each square pin (112) with the plate (113) is inserted into a square hole on the bracket (116) to make the matching arrangement of square pins (112) and fixed to the bracket (116) by a screw inserted into either of the remaining two rounded holes (119) on the plate. The square pins (112) need to be fixed closer to each other to increase the number of combinations.

When two square pins (112) with the plates (113) are arranged in line next to each other, screws used to fix the plate (113) to the bracket (116) cannot be fixed in line next to each other due to lack of space. Therefore, the screws are fixed in a zig-zag manner using either of the two holes (119). The bracket (116) is fixed to a frame member of the control and switchgear assembly by two screws inserted through holes (114) on the bracket (116).

The arrangement of slotted rounded pins (111) fixed on a withdrawable unit and the arrangement of square pins (112) fixed on the bracket (116) are arranged in a manner which allows one arrangement of slotted rounded pins (111) to pass through the relevant arrangement of square pins (112), if the correct withdrawable unit (1) is inserted in the correct functional unit compartment. Thus, the insertion interlock (110) prevents inserting of the withdrawable unit into a wrong functional unit compartment before it gets locked at the test position as the insertion interlock (110) is located closer to the rear side of the withdrawable unit (1).

As shown in Fig. 1A, a position sensor bracket (100) is fixed to the right (3) sidewall of the withdrawable unit (1). This position sensor bracket (100) is used to fix a position sensor to receive a signal depending on which position the withdrawable unit stays in the functional unit compartment.

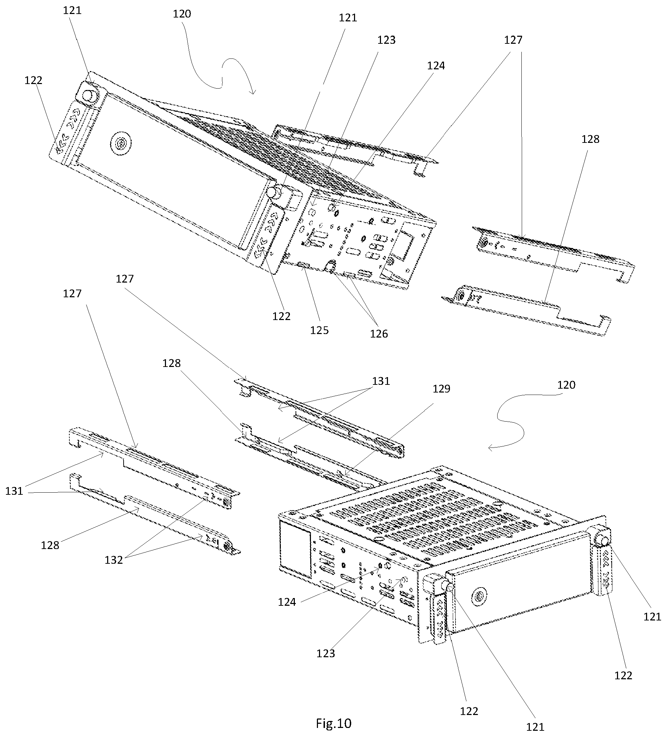

When the size of a withdrawable unit increases in width, the stability of the movement of the withdrawable unit in a functional unit compartment becomes weak. When the withdrawable unit is pushed in or pulled out, it could get stuck in the functional unit compartment due to improper alignment with the rails, which will adversely affect the establishment of proper electrical connections. Therefore, another variation of the invention is disclosed in Fig. 10. The second withdrawable unit (120) comprises two push and hold locking devices (20) with two push buttons (121), two lock pins (123) and two release pins (124) on the left and the right sidewalls of the withdrawable unit (120). There are two operating handles (122) on the left and the right sides of the front door holding plate of the withdrawable unit (120) to distribute the force applied on the withdrawable unit equally and to make the insertion and removal of the withdrawable unit easy.

The withdrawable unit (120) is also comprised with a set of isolated upper rails (127) and isolated lower rails (128) with two spring steel guide brackets (129) spot welded on each rail (127 and 128). The inside surfaces of all rails are embossed to reduce the friction generated between the withdrawable unit (120) and the rails (127 and 128) when the withdrawable unit (120) is moved. There are openings (131) in each rail (127 or 128) for outgoing plugs. The front side of each rail is identified by a debossed arrow (132).

The isolate lockable mechanism (125) and unit release mechanism (126) are devised on the right sidewall of the withdrawable unit (120). The operations and functionalities of the second withdrawable unit (120) are identical to the first withdrawable unit (1).

## Claims

1. A withdrawable unit for a functional unit compartment of a low-voltage switchgear or controlgear assembly having a push button operated locking mechanism at test position and connected position, isolate lockable mechanism for maintenance, and unit release mechanism for preventing the withdrawable unit falling down from functional unit compartment of the assembly, comprising:
a. a push and hold locking device (20) fixed on the inside right sidewall (3) and inside top wall of the withdrawable unit (1) using brackets (25a and 25b), a mechanism cover plate (24) covering the operation, screws (27a), spacers (27b) and press standoffs (27c) comprising:
i. a push button (12) loaded with spring (26a),
ii. a lock pin (21) with a collar (21a), inserted through a spring (26b), the bracket (25a) with a guide bush (21b) and the mechanism cover plate (24) and retained by a nut (21c) enabling the lock pin (21) to be slightly spring loaded,
iii. a release pin (22) with a step (22a), inserted through a spring (26c) and the bracket (25b) with a guide bush (22b) and retained by a nut (22c) enabling the release pin (22) to be slightly spring loaded, and
iv. a movable plate (23) having a tapered bend (23c) with a tapered guide slot (23d), guide slots (23a and 23b), a keyhole-type slot (23g) located in between the tapered guide slot (23) and the first guide slot (23a), and a right-angled bend (23e) with a trigger (23f);
b. an isolate lockable mechanism (30), comprising:
i. a locking arm (31) with a locking tab (31a), an operating point (31b), a slot (34) and an enable/disable tab (31c), whereby the locking arm (31) is spring loaded with a spring (32), pivotable around a pin (33) and limited by a pin (35) inserted through the slot (34),
ii. a cutout (37) for the locking tab (31a), a cutout (38) for the operating point (31b) and a cutout (39) for the enable/disable tab (31c) on the right sidewall (3) of the withdrawable unit (1), and
iii. enable/disable mechanism (40) comprising a switch (41) fixed inside the right sidewall (3) of the withdrawable unit (1) by a rivet (42) and movable up and down along a curve-shaped slot (44), a semi punch (46) to stop the switch (41) falling down accidentally;
c. a unit release mechanism (50) comprising:
i. a locking arm (51) with a locking tab (51a), an operating point (51b), a slot (55) and an enable/disable tab (31c), whereby the locking arm (31) is spring loaded with a spring (53), pivotable around a pin (54) and limited by a pin (56) inserted through the slot (55), and
ii. a cutout (57) for the locking tab (51a) and a cutout (58) for the operating point (51b) on the right sidewall (3) of the withdrawable unit (1);
d. insertion interlock (110) implemented using different arrangements of slotted rounded pins (111) and square pins (112) comprising:
i. a bracket (115) with threaded holes to which slotted rounded pins (111) are fixed,
ii. a plate (113) with three rounded holes (119) in a row, to which the square pins (112) are fixed by lock nuts (118), and
iii. a bracket (116) with a square hole and two rounded holes in each row, to which the plate (113) with the square pin (112) is fixed;
e. an operating handle (10), a gasket (11), a front door (13), a door holding plate (63) and a collar gasket (62) affixed to the door holding plate (63) in the front side (2), position sensor bracket (100) on its right sidewall (3), a mounting plate (60) fixed inside the withdrawable unit (1) to mount electrical devices, cutouts (61) for plugs and a spring-loaded control plug holder (75) in the rear side (4) of the withdrawable unit (1);
f. a gravity loaded stopping device (70) which controls the movement of a spring-loaded control plug holder (75) with a tab (76), comprising a control plug stopper (73) extending towards the rear side of the withdrawable unit (1) and having a tapered bottom edge (74);
g. an upper rail (80) with embossed surfaces (97) and longitudinal edges (80a and 80b) bent at right angle and a longitudinal edge (83) formed by further bending the longitudinal edge (80a), comprising:
i. a tapered tab (83a), rectangular dips (83b and 83d), a rectangular tab (83c) in between the two dips (83b and 83d) and a long edge (83e) on the longitudinal edge (83),
ii. a release plate (84) having a tapered tab (84a), a tapered dip (84b), a triangular shaped tab (84c) and a one-side opened tapered dip (84d), and guide bushes (85) with riveted rotatable steel ball on the longitudinal edge (80a),
iii. fixing holes (86) on longitudinal edges (80a and 80b), and
iv. unit-stoppers (87) at the rear end of the upper rail (80); and
h. a lower rail (81) with embossed surfaces (97) and longitudinal edges (89a and 89b) bended at right angle, comprising:
i. guide bushes (90) with riveted rotatable steel ball and a blocking tab (92) on the longitudinal edge (89a),
ii. fixing holes (88) on the longitudinal edges (89a and 89b), and
iii. unit-stoppers (91) at the rear end of the lower rail (81).

2. The withdrawable unit of Claim 1, wherein the collar gasket (62) affixed to the back of the door holding plate (63) in the front side (2) of the withdrawable unit (1) and the gasket (11) sealing the end of the operating handle (10) improve the degree of protection (IP code) when the withdrawable unit (1) is fully inserted into the functional unit compartment.

3. The withdrawable unit of Claim 1, wherein the movable plate (23) fixed internally to the right sidewall (3) of the withdrawable unit (1) using screws (27a), spacers (27b) and press standoff (27c), is moved backward through guide slots (23a and 23b) by pressing the push button (12) and is moved forward by the spring (26a).

4. The withdrawable unit of Claims 1 and 3, wherein the movable plate (23) of which the push button (12) is fixed to one end; the tapered bend (23c) with the tapered guide slot (23d) is located closer to that end; and the other end is formed with the right-angled bend (23e) with the trigger (23f) to operate the stopping device (70).

5. The withdrawable unit of Claims 1 and 3, wherein the movable plate (23) of which the guide slots (23a and 23b), tapered guide slot (23d) and the keyhole-type slot (23g) are located in three different levels on the movable plate (23) and the guide slots (23a and 23b) are located in the same level.

6. The withdrawable unit of Claims 1 and 3, wherein the movable plate (23) of which the keyhole-type slot (23g) has Section A (23h) which is circular and Section B (23i) which is ob-round.

7. The withdrawable unit of Claim 1, wherein the lock pin (21) is slightly spring-loaded and freely movable as the lock pin goes through the spring (26b) held between the bracket (25a) and the collar (21a), the bracket (25a) and the guide bush (21b), whereby the lock pin (21) is retained by the nut (21c).

8. The withdrawable unit of Claims 1, 3 and 7, wherein the width of the tapered guide slot (23d) is slightly greater than the diameter of the head of the lock pin (21); and the diameter of the collar (21a) of the lock pin (21) is slightly greater than the diameter of the head of the lock pin (21).

9. The withdrawable unit of Claims 1, 3 and 7, wherein the lock pin (21) is fully spring loaded and becomes pressed when the movable plate (23) moves backward by pressing the push button (12) in relation to the lock pin (21) as the tapered guide slot (23d) on the movable plate (23) moves the collar (21a) of the lock pin (21) inwards.

10. The withdrawable unit of Claim 1, wherein the release pin (22) is spring loaded and freely movable as the release pin (22) goes through the spring (26c) held between the bracket (25b) and the step (22a), the bracket (25b) and the guide bush (22b), whereby the release pin (22) is retained by the nut (22c).

11. The withdrawable unit of Claims 1, 3 and 10, wherein the width of the Section B (23i) of the keyhole-type slot (23g) is slightly greater than the diameter of the head of the release pin (22); and the diameter of the step (22a) is slightly greater than the diameter of the head of the release pin (22); and the diameter of the step (22a) of the release pin (22) is slightly lower than the diameter of the Section A (23h) of the keyhole-type slot (23g).

12. The withdrawable unit of Claims 1, 3, 10 and 11, wherein the release pin (22) is further spring-loaded and becomes pressed as the head of the release pin (22) is inserted through the Section B (23i) of the keyhole-type slot (23g) on the movable plate (23).

13. The withdrawable unit of Claims 1, 3 and 10, wherein the release pin (22) becomes released when the movable plate (23) moves backward by pressing the push button (12) and brings the Section A (23h) of the keyhole-type slot (23g) to the location of the release pin (22), enabling the step (22a) of the release pin (22) to come out through Section A (23h) of the keyhole-type slot (23g) and hold the movement of the movable plate (23), thereby the push button (12) becomes spring-loaded and pressed.

14. The withdrawable unit of Claims 1, 3, 7 and 10 wherein once the release pin (22) is pressed by the triangular-shaped tab (84c) or the tapered tab (84a) or by any other means, the step (22a) is moved inwards allowing the movable plate (23) to move forward by the loaded spring (26a) whereby the Section B (23i) of the keyhole-type slot (23g) is brought to the location of the release pin (22) and the step (22a) rests at the inside edge of the Section B (23i) of the keyhole type slot (23g) while the tapered guide slot (23d) moves forward relative to the lock pin (21), thereby the release pin (22) becomes pressed and the lock pin (21) and the push button (12) become released.

15. The withdrawable unit of Claim 1, wherein the tapered tab (83a), the rectangular dips (83b and 83d), the rectangular tab (83c) and the long edge (83e) on the longitudinal edge (83) and the release plate (84) having a tapered tab (84a), the tapered dip (84b), the triangular shaped tab (84c) and the one-side opened tapered dip (84d) and guide bushes (85) with riveted rotatable steel balls, on the longitudinal edge (80a), are all located on the side where the push and hold locking device (20) is fixed to the withdrawable unit (1).

16. The withdrawable unit of Claims 1 and 15, wherein the rails (80 and 81) are marked with debossed arrows (96) to identify the front side of the rails and are comprised of embossed surfaces (97) on inside surfaces of the rails (80 and 81), which touch with the moving withdrawable unit (1).

17. The withdrawable unit of Claims 1 and 15, wherein the unit-stoppers (87) are located at the rear end of the rails (80 and 81) to stop the withdrawable unit (1) in case of failure at the connected position.

18. The withdrawable unit of Claims 1 and 15, wherein the dips (83b and 83d) are in equal dimensions while the height of the rectangular tab (83c) is slightly lower than the height of the long edge (83e) or the tapered tab (83a) to make the long edge (83e) and the rectangular tab (83c) are in two different levels.

19. The withdrawable unit of Claims 1 and 15, wherein the dips (83b and 83d), the tab (83c) and the long edge (83e) of the longitudinal edge (83) and the dips (84b and 84d) and the tabs (84a and 84c) of the release plate (84) are formed and fixed in a manner where d1 mm is equal to d2 mm.

20. The withdrawable unit of Claim 1, wherein the spring-loaded control plug holder (75) is fixed at the rear side (4) of the withdrawable unit and the stopping device (70) is fixed to the right sidewall (3) of the withdrawable unit (1) using screws (71) inserted through spacers and slots (72) thereby the stopping device (70) is moveable up and down.

21. The withdrawable unit of Claims 1 and 20, wherein the stopping device (70) is at its lower-most position, on the tapered edge of the trigger (23f), blocking the tab (76) of the spring-loaded control plug holder (75), while the push button (12) is in the released state, thereby the control plug stopper (73) stops the forward movement of the spring-loaded control plug holder (75), by default.

22. The withdrawable unit of Claims 1 and 21, wherein the stopping device (70) together with the control plug stopper (73) moves up, unblocking the tab (76) of the spring-loaded control plug holder (75), when the push button (12) is pressed; and the stopping device (70) is moved down when the push button is released.

23. The withdrawable unit of Claims 1 and 22, wherein the tapered bottom edge (74) of the control plug stopper (73) is lifted above the level of the tab (76) or rests on the tab (76), the spring-loaded control plug holder (75) is no longer blocked and is freely movable forward or backward with the forward or backward movement of the withdrawable unit (1).

24. The withdrawable unit of Claims 1 and 21, wherein the spring-loaded control plug holder (75) is blocked by the control plug stopper (73) by default at the test position, whereby the spring-loaded control plug holder (75) is freely movable at the test position once the push button (12) is pressed; in between the test position and the connected position though the push button (12) gets released and the stopping device moves down whereby the tapered bottom edge (74) of the control plug stopper (73) rests on the tab (76).

25. The withdrawable unit of Claims 1, 21 and 24, wherein the control plug holder (75) reaches it is maximum towards the front where the tab (76) comes forward beyond the tapered bottom edge (74) of the control plug stopper (73), at the connected position while the push button (12) is at the released state.

26. The withdrawable unit of Claims 1, 21 and 25, wherein the control plug holder (75) moves backward lifting the control plug stopper (73) up by the tab (76) due to the tapered bottom edge (74) being resting on the tab (76), when the withdrawable unit is unlocked and moved from the connected position to the test position.

27. The withdrawable unit of Claims 1, 21 and 26, wherein the tab (76) passes the tapered bottom edge (74) allowing the control plug stopper (73) to move further downward and block the spring-loaded control plug holder (75) at the test position whereby the spring-loaded control plug holder (75) reaches its maximum towards the back, when the withdrawable unit is unlocked and moved from the connected position to the test position.

28. The withdrawable unit of Claim 1, wherein the locking arm (31) of which the rear edge of the locking tab (31a) is tapered while the front edge of the locking tab (31a) is straight and the operating point (31b) has a lock hole (36).

29. The withdrawable unit of Claims 1 and 28, wherein the locking arm (31) of the isolate lockable mechanism (30) is fixed to the withdrawable unit (1) and spring-loaded in a manner where the locking tab (31a), the operating point (31b) and the enable/disable tab (31c) come out through the cutouts (37, 38 and 39) respectively.

30. The withdrawable unit of Claim 1, wherein the enable/disable mechanism of which one end of the switch (41) is bent to have a step-up end (43) enabling it to be passed through the curve-shaped slot (44) on the right sidewall (3) of the withdrawable unit (1).

31. The withdrawable unit of Claims 1 and 30, wherein the enable/disable mechanism of which the switch (41) blocks or unblocks the entrance of the enable/disable tab (31c) through the cutout (39) in the right sidewall (3) of the withdrawable unit (1) when the switch (41) is fully moved down or up respectively; thereby the isolate lockable mechanism (30) is disabled or enabled.

32. The withdrawable unit of Claims 1 and 30, wherein the withdrawable unit is pulled out until the front edge of the locking tab (31a) of the locking arm (31) hits and stops at the blocking tab (92) on the lower rail (81), when the enable/disable mechanism is enabled, at which point the operating point (31b) is pressed inwards by a finger to pulled out the withdrawable unit (1).

33. The withdrawable unit of Claims 1 and 32, wherein the withdrawable unit is lockable by a padlock inserted through lock hole (36) at the isolate lockable position when the isolate lockable mechanism has been enabled.

34. The withdrawable unit of Claims 1 and 28, wherein the tapered edge of the locking tab (31a) hits and is pressed inside by the blocking tab (92) without any additional operation when the withdrawable unit (1) is inserted to the functional unit compartment.

35. The withdrawable unit of Claim 1, wherein the locking arm (51) of the unit release mechanism (50), of which the rear edge of the locking tab (51a) is tapered while the front edge is straight.

36. The withdrawable unit of Claims 1 and 35, wherein the locking arm (51) of the unit release mechanism (50) is fixed to the withdrawable unit (1) and spring-loaded in a manner where the locking tab (51a) and the operating point (51b) come out through the cutouts (57 and 58) respectively.

37. The withdrawable unit of Claim 1, wherein the withdrawable unit (1) is pulled out until the front edge of the locking tab (51a) of the locking arm (51) hits and stops at the blocking tab (92) on the lower rail (81), at which point the operating point (51b) is pressed inwards by a finger to pulled out the withdrawable unit (1).

38. The withdrawable unit of Claims 1 and 35, wherein the tapered edge of the locking tab (51a) hits and is pressed inside by the blocking tab (92) without any additional operation when the withdrawable unit (1) is inserted to the functional unit compartment.

39. The withdrawable unit of Claim 1, wherein the insertion interlock (110) of which the bracket (115) is fixed inside the right sidewall (3) of the withdrawable unit (1) by two screws (117) in a manner where the slotted rounded pins (111) come out through the holes on the right sidewall (3) of the withdrawable unit (1).

40. The withdrawable unit of Claims 1 and 39, wherein the insertion interlock (110) of which each square pin (112) with the plate (113) is inserted into a square hole on the bracket (116) to make the matching arrangement of square pins (112) and fixed to the bracket (116) by a screw inserted into either of the remaining two rounded holes (119) on the plate (113) in a zig-zag manner, thereby the square pins (112) are fixed closer to each other to increase the number of combinations.

41. The withdrawable unit of Claims 1 and 39, wherein the insertion interlock (110) of which the arrangement of slotted rounded pins (111) fixed on the withdrawable unit and the arrangement of square pins (112) fixed on the bracket (116) are arranged in a manner which allows one arrangement of slotted rounded pins (111) to pass through the relevant arrangement of square pins (112).

42. The withdrawable unit of Claims 1 and 39, wherein the insertion interlock (110) prevents inserting of a withdrawable unit into a wrong functional unit compartment before it gets locked at the test position.

43. The withdrawable unit of Claims 1, wherein the position sensor bracket (100) is used to fix a position sensor to receive a signal depending on which position the withdrawable unit stays in the functional unit compartment.

44. The withdrawable unit of Claim 1, wherein the locking and unlocking of the withdrawable unit (1) at connected position and test position, and the operation of the stopping device (70) are achieved by means of the push and hold locking device (20).

45. The withdrawable unit of Claim 1, wherein the push and hold locking device (20) of which, by default, the push button (12) is in the released state; the lock pin (21) is in released state; and the release pin (22) is in pressed state, respectively by the springs (26a, 26b and 26c) whereby the force of the spring (26a) is greater than that of each spring (26b or 26c).

46. The withdrawable unit of Claims 1, wherein the push button (12) and the lock pin (21) are in the released state while the release pin (22) is in the pressed state, when the withdrawable unit (1) is completely removed from its compartment.

47. The withdrawable unit of Claims 1, 3, 7, 15 and 46, when the withdrawable unit (1) is inserted into its compartment the lock pin (21) is partially pressed by the tapered tab (83a), and is released and gets locked in the rectangular dip (83b), while the release pin (22) reaches the tapered dip (84b) on the release plate (84).

48. The withdrawable unit of Claims 1, 9, 13, 14 and 47, wherein the lock pin (21) is in the released state at the rectangular dip (83b) and the release pin (22) is in the pressed state at the tapered dip (84b), when the withdrawable unit (1) is locked at the test position; whereby, the lock pin (21) and release pin (22) respectively become pressed and released when the push button (12) is pressed to unlock the withdrawable unit at the test position.

49. The withdrawable unit of Claims 1, 9, 13, 14 and 47, wherein the lock pin (21) is in the released state at the rectangular dip (83d) and the release pin (22) is in the pressed state at the tapered dip (84d), when the withdrawable unit (1) is locked at the connected position; whereby, the lock pin (21) and release pin (22) respectively become to pressed and released, when the push button (12) is pressed to unlock the withdrawable unit at the connected position.

50. The withdrawable unit of Claims 1, 3, 7, 10, 14 and 15, wherein the lock pin (21) and the push button are released once the push button is pressed to unlock the withdrawable unit and moved from test position to connected position, from connected position to test position, or pulled out from test position, as the release pin (22) is pressed by the triangular-shaped tab (84c) or the tapered tab (84a).

51. The withdrawable unit of Claim 1, wherein the withdrawable unit (1) is completely removed from the functional unit compartment and inserted again while the push button (12) is pressed, the lock pin (21) is in the pressed state and the release pin (22) is in the released state, the released pin (22) hits the tapered tab (84a) and prevents the withdrawable unit (1) being further inserted into the functional unit compartment.

52. The withdrawable unit of Claims 1, 3, 7 and 10, wherein the withdrawable unit (1) is unlocked at the test position or connected position by pressing the push button (12) whereby the backward movement of the tapered guide slot (23d) on the tapered bend (23c) on the movable plate (23) presses the lock pin (21) inwards and the backward movement of the keyhole-type slot (23g) on the movable plate (23) moves the Section A (23h) to the location of the release pin (22) to release the release pin (22) and thereby the movable plate (23) is held by the step (22a) of the release pin (22), thereby the push button is spring loaded.

53. A withdrawable unit (120) larger than the withdrawable unit (1) in Claim 1, having similar functionalities of the withdrawable unit (1) in Claim 1, comprising:
a. two push and hold locking devices (20) with two push buttons (121);
b. two lock pins (123) and two release pins (124) on the left and the right sidewalls of the withdrawable unit (120);
c. two operating handles (122) on the left and the right side of the front door holding plate of the withdrawable unit (120) and
d. a set of isolated upper rails (127) and isolated lower rails (128) with two spring steel guide brackets (129) spot welded on each rail (127 and 128).

54. The withdrawable unit (120) of Claim 53, wherein the inside surfaces of all rails (127 and 128) are embossed to reduce the friction generated between the withdrawable unit (120) and the rails (127 and 128) when the withdrawable unit (120) is moved.

55. The withdrawable unit (120) of Claim 53, wherein the openings (131) are kept in each rail (127 or 128) for outgoing plugs while the front side of each rail has a debossed arrow (132).

56. The withdrawable unit (120) of Claim 53, wherein the isolate lockable mechanism (125) and unit release mechanism (126) are devised on the right sidewall of the withdrawable unit (120).

57. A method adapted for inserting and removing a withdrawable unit for a functional unit compartment of a low-voltage switchgear or controlgear assembly, as claimed in Claim 1, such method comprising steps of:
a. Fixing upper rail (80) and lower rail (81) in functional unit compartment of low-voltage switchgear or controlgear assembly, using fixing holes (86 and 88), keeping the unit stoppers (87) towards the rear side of the functional unit compartment and the debossed arrows towards the front side of the functional unit compartment. When the two guide rails (80 and 81) are fixed in the functional unit compartment, the guide bushes (85 or 90) with a riveted rotatable steel ball and the blocking tab (92) stay on the side where the push and hold locking device is located on the withdrawable unit (1);
b. Fixing the bracket (115) with pre-fixed slotted rounded pins (111) of the insertion interlock (110) in a specific arrangement, from the inside right sidewall (3) of the withdrawable unit (1);
c. Fixing the bracket (116) with pre-fixed plates (113) and square pins (112) of the insertion interlock (110) in a specific arrangement which allows to pass only through the specific arrangement of slotted rounded pins (111) in above Step b., whereby the bracket is fixed to a suitable frame member in the functional unit compartment;
d. Inserting the correct withdrawable unit (1) into the functional unit compartment while the push button (12), the lock pin (21) and the release pin (22) are in their default states, i.e. the push button (12) is in the released state; the lock pin (21) is in the released state; and the release pin (22) is in the pressed state;
e. Inserting the withdrawable unit (1) into the functional unit compartment while the push button (12) is pressed, whereby the withdrawable unit (1) can only be inserted until the release pin (22) hits the tapered tab (84a) which prevents the withdrawable unit (1) being further inserted into the functional unit compartment, whereby the withdrawable unit is pulled out and the release pin (22) is pressed by a finger to bring the withdrawable unit to default state;
f. Inserting the withdrawable unit (1) until the test position, whereby the withdrawable unit is locked at the test position by means of the lock pin (21) being in the rectangular dip (83b) on the upper rail (80);
g. Unlocking the withdrawable unit by pressing the push button (12) at the test position and the withdrawable unit is pushed in towards the connected position or pulled out from the test position;
h. Having pressed the push button (12), when the withdrawable unit is pushed in towards the connected position or pulled out from the test position, the release pin (22) is pressed by respectively the triangular-shaped tab (84c) or the tapered tab (84a), whereby the forward movement of the movable plate (23) brings the lock pin (21) and the push button (12) to released state;
i. Inserting the withdrawable unit (1) until the connected position, whereby the withdrawable unit is locked at the connected position by means of the lock pin (21) being in the rectangular dip (83d) on the upper rail (80);
j. Unlocking the withdrawable unit by pressing the push button (12) at the connected position and the withdrawable unit is pulled out towards the test position until the withdrawable unit is locked at the test position;
k. Unlocking the withdrawable unit (1) at the test position by pressing the push button (12) and the withdrawable unit is pulled out until it gets locked by the unit release mechanism (50), provided that the isolate lockable mechanism (30) had not been enabled;
l. Pressing the operating point (51b) inwards by a finger and pull out the withdrawable unit (1) from the functional unit compartment when it gets locked by the unit release mechanism (50).
m. In the event of carrying out any maintenance work, below Steps from n. to s. are followed.
n. Unlocking the withdrawable unit at the test position and pulling out the withdrawable until the isolate lockable mechanism comes out from the functional unit compartment;
o. Enabling the isolate lockable mechanism (30) by slightly pressing inwards the step-up end (43) of the enable/disable mechanism (40) and moving the switch (41) up in the curved-shaped slot (44);
p. Inserting the withdrawable unit (1) until the locking tab (31a) passes the blocking tab (92) where the tapered edge of the locking tab (51a) hits and passes the blocking tab (92);
q. Pulling out the withdrawable unit until the front edge of the locking tab (31a) hits and stops at the blocking tab (92) on the lower rail (81) whereby the withdrawable unit (1) cannot be pulled out, but can be pushed in until the withdrawable unit (1) gets locked at the test position;
r. Locking the withdrawable unit (1) by inserting a padlock through lock hole (36) to lock the withdrawable unit (1) at isolate lockable position where the withdrawable unit (1) is fully disconnected from incoming and outgoing circuits;
s. After finishing the maintenance work, the padlock is removed and the operating point (31b) is pressed inwards by a finger to pull out or insert the withdrawable unit (1).

## Patentansprüche

1. Eine ausziehbare Einheit für ein Funktionsfach einer Niederspannungsschaltanlage oder eines Steuergeräts mit einem per Knopfdruck betätigten Verriegelungsmechanismus in Prüf- und Anschlussstellung, einem Verriegelungsmechanismus zur Trennung für Wartungsarbeiten und einem Entriegelungsmechanismus, der ein Herausfallen der ausziehbaren Einheit aus dem Funktionsfach verhindert, bestehend aus:
a. einer Druck- und Halteverriegelung (20), die mittels Halterungen (25a und 25b) an der rechten Innenwand (3) und der oberen Innenwand der ausziehbaren Einheit (1) befestigt ist, einer Abdeckplatte (24) für den Mechanismus, Schrauben (27a), Abstandshaltern (27b) und Pressbolzen (27c), bestehend aus:
i. einem mit einer Feder (26a) belasteten Druckknopf (12),
ii. ein Verriegelungsstift (21) mit einem Kragen (21a), der durch eine Feder (26b), die Halterung (25a) mit einer Führungsbuchse (21b) und die Abdeckplatte (24) des Mechanismus geführt und durch eine Mutter (21c) gesichert ist, wodurch der Verriegelungsstift (21) leicht federbelastet wird;
iii. ein Auslösestift (22) mit einer Stufe (22a), der durch eine Feder (26c) und die Halterung (25b) mit einer Führungsbuchse (22b) geführt und durch eine Mutter (22c) gesichert ist, wodurch der Auslösestift (22) leicht federbelastet wird; und
iv. eine bewegliche Platte (23) mit einem konischen Bogen (23c) mit einer konischen Führungsnut (23d), Führungsnuten (23a und 23b), einer schlüssellochförmigen Nut (23g) zwischen der konischen Führungsnut (23) und der ersten Führungsnut (23a) sowie einem rechtwinkligen Bogen (23e) mit einem Auslöser (23f);
b. ein isolierender Verriegelungsmechanismus (30), bestehend aus:
i. einem Verriegelungsarm (31) mit einer Verriegelungslasche (31a), einem Betätigungspunkt (31b), einem Schlitz (34) und einer Aktivierungs-/Deaktivierungslasche (31c), wobei der Verriegelungsarm (31) mit einer Feder (32) vorgespannt, um einen Stift (33) schwenkbar und durch einen durch den Schlitz (34) geführten Stift (35) begrenzt ist,
ii. einer Aussparung (37) für die Verriegelungslasche (31a), einer Aussparung (38) für den Betätigungspunkt (31b) und einer Aussparung (39) für die Aktivierungs-/Deaktivierungslasche (31c) an der rechten Seitenwand (3) der ausziehbaren Einheit (1), und
iii. Aktivierungs-/Deaktivierungsmechanismus (40) mit einem Schalter (41), der mittels einer Niete (42) an der Innenseite der rechten Seitenwand (3) der ausziehbaren Einheit (1) befestigt und entlang eines kurvenförmigen Schlitzes (44) auf und ab beweglich ist, sowie einem Halbstempel (46), der ein versehentliches Herausfallen des Schalters (41) verhindert;
c. ein Auslösemechanismus (50) mit:
i. einem Verriegelungsarm (51) mit einer Verriegelungslasche (51a), einem Betätigungspunkt (51b), einem Schlitz (55) und einer Aktivierungs-/Deaktivierungslasche (31c), wobei der Verriegelungsarm (31) durch eine Feder (53) vorgespannt, um einen Stift (54) schwenkbar und durch einen durch den Schlitz (55) geführten Stift (56) begrenzt ist, und
ii. einer Aussparung (57) für die Verriegelungslasche (51a) und einer Aussparung (58) für den Betätigungspunkt (51b) an der rechten Seitenwand (3) der ausziehbaren Einheit (1);
d. Die Einsteckverriegelung (110) wird durch verschiedene Anordnungen von geschlitzten Rundstiften (111) und Vierkantstiften (112) realisiert und umfasst:
i. eine Halterung (115) mit Gewindebohrungen zur Befestigung der geschlitzten Rundstifte (111),
ii. eine Platte (113) mit drei Rundlöchern (119) in einer Reihe, an der die Vierkantstifte (112) mittels Sicherungsmuttern (118) befestigt sind, und
iii. eine Halterung (116) mit je einem Vierkantloch und zwei Rundlöchern in einer Reihe, an der die Platte (113) mit dem Vierkantstift (112) befestigt ist;
e. ein Bediengriff (10), eine Dichtung (11), eine Fronttür (13), eine Türhalteplatte (63) und eine an der Türhalteplatte (63) an der Vorderseite (2) befestigte Kragendichtung (62), eine Positionssensorhalterung (100) an der rechten Seitenwand (3), eine im Inneren der ausziehbaren Einheit (1) befestigte Montageplatte (60) zur Aufnahme elektrischer Geräte, Aussparungen (61) für Stecker und ein federbelasteter Steckerhalter (75) an der Rückseite (4) der ausziehbaren Einheit (1);
f. eine durch Schwerkraft belastete Stoppvorrichtung (70), die die Bewegung eines federbelasteten Steckerhalters (75) mit einer Lasche (76) steuert und einen Steckerstopper (73) umfasst, der sich zur Rückseite der ausziehbaren Einheit (1) erstreckt und eine abgeschrägte Unterkante (74) aufweist;
g. eine obere Schiene (80) mit geprägten Oberflächen (97) und rechtwinklig abgewinkelten Längskanten (80a und 80b) sowie einer durch weiteres Biegen der Längskante (80a) gebildeten Längskante (83) umfasst:
i. eine konische Lasche (83a), rechteckige Vertiefungen (83b und 83d), eine rechteckige Lasche (83c) zwischen den beiden Vertiefungen (83b und 83d) und eine lange Kante (83e) an der Längskante (83),
ii. eine Auslöseplatte (84) mit einer konischen Lasche (84a), einer konischen Vertiefung (84b), einer dreieckigen Lasche (84c) und einer einseitig geöffneten konischen Vertiefung (84d) sowie Führungsbuchsen (85) mit vernieteter, drehbarer Stahlkugel an der Längskante (80a),
iii. befestigungslöcher (86) an den Längskanten (80a und 80b) und
iv. anschlagstücke (87) am hinteren Ende der oberen Schiene (80); und
h. eine untere Schiene (81) mit geprägten Oberflächen (97) und rechtwinklig abgewinkelten Längskanten (89a und 89b), bestehend aus:
i. Führungsbuchsen (90) mit vernieteter, drehbarer Stahlkugel und einer Sperrlasche (92) an der Längskante (89a),
ii. Befestigungslöcher (88) an den Längskanten (89a und 89b) und
iii. Anschlagstücke (91) am hinteren Ende der unteren Schiene.

2. Die ausziehbare Einheit nach Anspruch 1, wobei die an der Rückseite der Türhalteplatte (63) auf der Vorderseite (2) der ausziehbaren Einheit (1) angebrachte Kragendichtung (62) und die Dichtung (11), die das Ende des Bediengriffs (10) abdichtet, den Schutzgrad (IP-Code) verbessern, wenn die ausziehbare Einheit (1) vollständig in das Funktionsfach eingeschoben ist.

3. Die ausziehbare Einheit nach Anspruch 1, wobei die bewegliche Platte (23), die mittels Schrauben (27a), Abstandshaltern (27b) und einem Druckbolzen (27c) an der rechten Seitenwand (3) der ausziehbaren Einheit (1) befestigt ist, durch Drücken des Druckknopfes (12) durch Führungsschlitze (23a und 23b) nach hinten bewegt und durch die Feder (26a) nach vorne bewegt wird.

4. Die ausziehbare Einheit nach Anspruch 1 und 3, wobei die bewegliche Platte (23), an deren einem Ende der Druckknopf (12) befestigt ist, ... Die konische Biegung (23c) mit der konischen Führungsnut (23d) befindet sich näher an diesem Ende; das andere Ende ist mit der rechtwinkligen Biegung (23e) und dem Auslöser (23f) zur Betätigung der Stoppvorrichtung (70) versehen.

5. Die ausziehbare Einheit nach Anspruch 1 und 3, wobei die bewegliche Platte (23), auf der die Führungsnuten (23a und 23b), die konische Führungsnut (23d) und die schlüssellochförmige Nut (23g) auf drei verschiedenen Ebenen angeordnet sind und die Führungsnuten (23a und 23b) auf derselben Ebene liegen.

6. Die ausziehbare Einheit nach Anspruch 1 und 3, wobei die bewegliche Platte (23) mit dem schlüssellochförmigen Schlitz (23g) einen kreisförmigen Abschnitt A (23h) und einen länglichen Abschnitt B (23i) aufweist.

7. Die ausziehbare Einheit nach Anspruch 1, wobei der Verriegelungsstift (21) leicht federbelastet und frei beweglich ist, während er durch die zwischen der Halterung (25a) und dem Kragen (21a) sowie der Halterung (25a) und der Führungsbuchse (21b) gehaltene Feder (26b) gleitet, wobei der Verriegelungsstift (21) durch die Mutter (21c) gehalten wird.

8. Die ausziehbare Einheit nach Anspruch 1, 3 und 7, wobei die Breite des sich verjüngenden Führungsschlitzes (23d) etwas größer ist als der Durchmesser des Kopfes des Verriegelungsstiftes (21). und der Durchmesser des Kragens (21a) des Verriegelungsstifts (21) geringfügig größer ist als der Durchmesser des Kopfes des Verriegelungsstifts (21).

9. Die ausziehbare Einheit nach Anspruch 1, 3 und 7, wobei der Verriegelungsstift (21) vollständig federbelastet ist und beim Zurückbewegen der beweglichen Platte (23) durch Drücken des Druckknopfs (12) relativ zum Verriegelungsstift (21) eingedrückt wird, während der konische Führungsschlitz (23d) an der beweglichen Platte (23) den Kragen (21a) des Verriegelungsstifts (21) nach innen bewegt.

10. Die ausziehbare Einheit nach Anspruch 1, wobei der Auslösestift (22) federbelastet und frei beweglich ist, während er durch die zwischen der Halterung (25b) und der Stufe (22a), der Halterung (25b) und der Führungsbuchse (22b) gehaltene Feder (26c) gleitet, wobei der Auslösestift (22) durch die Mutter (22c) gehalten wird.

11. Die ausziehbare Einheit nach Anspruch 1, 3 und 10, wobei die Breite des Abschnitts B (23i) des Schlüssellochschlitzes (23g) etwas größer ist als der Durchmesser des Kopfes des Auslösestiftes (22); und der Durchmesser der Stufe (22a) etwas größer ist als der Durchmesser des Kopfes des Auslösestiftes (22); und der Durchmesser der Stufe (22a) des Auslösestiftes (22) etwas kleiner ist als der Durchmesser des Abschnitts A (23h) des Schlüssellochschlitzes (23g).

12. Die ausziehbare Einheit nach Anspruch 1, 3, 10 und 11, wobei der Auslösestift (22) zusätzlich federbelastet ist und beim Einführen des Kopfes des Auslösestiftes (22) durch den Abschnitt B (23i) des Schlüssellochschlitzes (23g) auf der beweglichen Platte (23) gedrückt wird.

13. Die ausziehbare Einheit nach Anspruch 1, 3 und 10, wobei der Auslösestift (22) freigegeben wird, wenn die bewegliche Platte (23) durch Drücken des Druckknopfes (12) nach hinten bewegt wird und der Abschnitt A (23h) des Schlüssellochschlitzes (23g) in die Position des Auslösestiftes (22) gebracht wird. Dadurch kann die Stufe (22a) des Auslösestiftes (22) durch den Abschnitt A (23h) des Schlüssellochschlitzes (23g) heraustreten und die Bewegung der beweglichen Platte (23) blockieren, wodurch der Druckknopf (12) federbelastet und gedrückt wird.

14. Die ausziehbare Einheit nach Anspruch 1, 3, 7 und 10, wobei nach Betätigung des Auslösestifts (22) durch die dreieckige Lasche (84c) oder die konische Lasche (84a) oder auf andere Weise die Stufe (22a) nach innen bewegt wird. Dadurch kann sich die bewegliche Platte (23) durch die vorgespannte Feder (26a) nach vorn bewegen, wodurch der Abschnitt B (23i) des Schlüssellochschlitzes (23g) in die Position des Auslösestifts (22) gebracht wird und die Stufe (22a) an der Innenkante des Abschnitts B (23i) des Schlüssellochschlitzes (23g) anliegt, während sich der konische Führungsschlitz (23d) relativ zum Verriegelungsstift (21) nach vorn bewegt. Dadurch wird der Auslösestift (22) betätigt und der Verriegelungsstift (21) sowie der Druckknopf (12) werden freigegeben.

15. Die ausziehbare Einheit nach Anspruch 1, wobei die konische Lasche (83a), die rechteckigen Vertiefungen (83b und 83d), die rechteckige Lasche (83c) und die lange Kante (83e) an der Längskante (83) sowie die Auslöseplatte (84) mit einer konischen Lasche (84a), der konischen Vertiefung (84b), der dreieckigen Lasche (84c) und der einseitig geöffneten konischen Vertiefung (84d) und Führungsbuchsen (85) mit vernieteten, drehbaren Stahlkugeln an der Längskante (80a) alle auf der Seite angeordnet sind, an der die Druck- und Halteverriegelungsvorrichtung (20) an der ausziehbaren Einheit (1) befestigt ist.

16. Die ausziehbare Einheit nach Anspruch 1 und 15, wobei die Schienen (80 und 81) mit vertieften Pfeilen (96) zur Kennzeichnung ihrer Vorderseite versehen sind und an ihren Innenseiten geprägte Flächen (97) aufweisen, die mit der beweglichen ausziehbaren Einheit (1) in Kontakt stehen.

17. Die ausziehbare Einheit nach Anspruch 1 und 15, wobei die Anschläge (87) am hinteren Ende der Schienen (80 und 81) angeordnet sind, um die ausziehbare Einheit (1) im Falle eines Fehlers in der verbundenen Position zu stoppen.

18. Die ausziehbare Einheit nach Anspruch 1 und 15, wobei die Vertiefungen (83b und 83d) gleich groß sind, die Höhe der rechteckigen Lasche (83c) jedoch etwas geringer ist als die Höhe der Längskante (83e) bzw. der sich verjüngenden Lasche (83a), sodass die Längskante (83e) und die rechteckige Lasche (83c) auf unterschiedlichen Höhen liegen.

19. Die ausziehbare Einheit nach Anspruch 1 und 15, wobei die Vertiefungen (83b und 83d), die Lasche (83c) und die Längskante (83e) der Längskante (83) sowie die Vertiefungen (84b und 84d) und die Laschen (84a und 84c) der Auslöseplatte (84) so geformt und befestigt sind, dass d1 mm gleich d2 mm ist.

20. Die ausziehbare Einheit nach Anspruch 1, wobei der federbelastete Steuersteckerhalter (75) an der Rückseite (4) der ausziehbaren Einheit befestigt ist und die Stoppvorrichtung (70) an der rechten Seitenwand (3) der ausziehbaren Einheit (1) mittels Schrauben (71) befestigt ist, die durch Abstandshalter und Schlitze (72) eingeführt sind, wodurch die Stoppvorrichtung (70) auf und ab beweglich ist.

21. Die ausziehbare Einheit nach Anspruch 1 und 20, wobei sich die Stoppvorrichtung (70) in ihrer untersten Position an der abgeschrägten Kante des Auslösers (23f) befindet und die Lasche (76) des federbelasteten Steuersteckerhalters (75) blockiert, solange der Druckknopf (12) losgelassen ist. Dadurch stoppt der Steuersteckerstopper (73) standardmäßig die Vorwärtsbewegung des federbelasteten Steuersteckerhalters (75).

22. Die ausziehbare Einheit nach Anspruch 1 und 21, wobei sich die Stoppvorrichtung (70) zusammen mit dem Steuersteckerstopper (73) beim Drücken des Druckknopfs (12) nach oben bewegt und die Lasche (76) des federbelasteten Steuersteckerhalters (75) freigibt; und dass sich die Stoppvorrichtung (70) beim Loslassen des Druckknopfs nach unten bewegt.

23. Die ausziehbare Einheit nach Anspruch 1 und 22, wobei die abgeschrägte Unterkante (74) des Steuerstopfenstoppers (73) über die Lasche (76) angehoben wird oder auf dieser aufliegt, der federbelastete Steuerstopfenhalter (75) nicht mehr blockiert ist und sich mit der Vorwärts- oder Rückwärtsbewegung der ausziehbaren Einheit (1) frei vorwärts oder rückwärts bewegen kann.

24. Die ausziehbare Einheit nach Anspruch 1 und 21, wobei der federbelastete Steuerstopfenhalter (75) in der Testposition standardmäßig durch den Steuerstopfenstopper (73) blockiert ist und sich nach Betätigung des Druckknopfes (12) in der Testposition frei bewegen kann; zwischen der Testposition und der verbundenen Position wird der Druckknopf (12) losgelassen, und die Arretierungsvorrichtung bewegt sich nach unten, wobei die abgeschrägte Unterkante (74) des Steuerstopfenstoppers (73) auf der Lasche (76) aufliegt.

25. Die ausziehbare Einheit nach Anspruch 1, 21 und 24, wobei der Steuersteckerhalter (75) in der verbundenen Position, wenn sich der Druckknopf (12) in der gelösten Position befindet, seine maximale Vorwärtsbewegung erreicht, wenn die Lasche (76) über die abgeschrägte Unterkante (74) des Steuersteckerstoppers (73) hinausragt.

26. Die ausziehbare Einheit nach Anspruch 1, 21 und 25, wobei sich der Steuersteckerhalter (75) nach hinten bewegt und den Steuersteckerstopper (73) durch die Lasche (76) anhebt, da die abgeschrägte Unterkante (74) auf der Lasche (76) aufliegt, wenn die ausziehbare Einheit entriegelt und von der verbundenen Position in die Testposition bewegt wird.

27. Die ausziehbare Einheit nach den Ansprüchen 1, 21 und 26, wobei die Lasche (76) die abgeschrägte Unterkante (74) passiert, wodurch sich der Steuerstopfenstopper (73) weiter nach unten bewegen und den federbelasteten Steuerstopfenhalter (75) in der Testposition blockieren kann, wobei der federbelastete Steuerstopfenhalter (75) seine maximale Auslenkung nach hinten erreicht, wenn die ausziehbare Einheit entriegelt und von der verbundenen Position in die Testposition bewegt wird.

28. Die ausziehbare Einheit nach Anspruch 1, wobei der Verriegelungsarm (31) mit einer abgeschrägten Hinterkante der Verriegelungslasche (31a) und einer geraden Vorderkante sowie einem Betätigungspunkt (31b) mit einer Verriegelungsbohrung (36) versehen ist.

29. Die ausziehbare Einheit nach Anspruch 1 und 28, wobei der Verriegelungsarm (31) des Isolationsverriegelungsmechanismus (30) an der ausziehbaren Einheit (1) befestigt und federbelastet ist, sodass die Verriegelungslasche (31a), der Betätigungspunkt (31b) und die Aktivierungs-/Deaktivierungslasche (31c) jeweils durch die Aussparungen (37, 38 und 39) herausragen.

30. Die ausziehbare Einheit nach Anspruch 1, wobei der Aktivierungs-/Deaktivierungsmechanismus, dessen eines Ende des Schalters (41) so abgewinkelt ist, dass es ein nach oben gerichtetes Ende (43) aufweist, das das Durchführen durch den kurvenförmigen Schlitz (44) an der rechten Seitenwand (3) der ausziehbaren Einheit (1) ermöglicht.

31. Die ausziehbare Einheit nach den Ansprüchen 1 und 30, wobei der Aktivierungs-/Deaktivierungsmechanismus, dessen Schalter (41) den Eintritt der Aktivierungs-/Deaktivierungslasche (31c) durch die Aussparung (39) in der rechten Seitenwand (3) der ausziehbaren Einheit (1) blockiert bzw. freigibt, wenn der Schalter (41) vollständig nach unten bzw. oben bewegt wird; dadurch wird der Verriegelungsmechanismus (30) deaktiviert bzw. aktiviert.

32. Die Auszieheinheit nach Anspruch 1 und 30, wobei die Auszieheinheit herausgezogen wird, bis die Vorderkante der Verriegelungslasche (31a) des Verriegelungsarms (31) an der Sperrlasche (92) der unteren Schiene (81) anliegt und einrastet, wenn der Aktivierungs-/Deaktivierungsmechanismus aktiviert ist. Anschließend wird der Betätigungspunkt (31b) mit einem Finger nach innen gedrückt, um die Auszieheinheit (1) herauszuziehen.

33. Die Auszieheinheit nach Anspruch 1 und 32, wobei die Auszieheinheit durch ein Vorhängeschloss, das durch die Verriegelungsöffnung (36) in der Verriegelungsposition eingeführt wird, verriegelt werden kann, wenn der Verriegelungsmechanismus aktiviert ist.

34. Die Auszieheinheit nach Anspruch 1 und 28, wobei die abgeschrägte Kante der Verriegelungslasche (31a) an der Sperrlasche (92) anliegt und von dieser ohne weitere Betätigung nach innen gedrückt wird, wenn die Auszieheinheit (1) in das Fach der Funktionseinheit eingesetzt wird.

35. Die ausziehbare Einheit nach Anspruch 1, wobei der Verriegelungsarm (51) des Auslösemechanismus (50) der Einheit so konstruiert ist, dass die hintere Kante der Verriegelungslasche (51a) abgeschrägt und die vordere Kante gerade ist.

36. Die ausziehbare Einheit nach Anspruch 1 und 35, wobei der Verriegelungsarm (51) des Auslösemechanismus (50) an der ausziehbaren Einheit (1) befestigt und federbelastet ist, sodass die Verriegelungslasche (51a) und der Betätigungspunkt (51b) jeweils durch die Aussparungen (57 und 58) austreten.

37. Die Auszieheinheit nach Anspruch 1, wobei die Auszieheinheit (1) herausgezogen wird, bis die Vorderkante der Verriegelungslasche (51a) des Verriegelungsarms (51) an der Sperrlasche (92) der unteren Schiene (81) anliegt und einrastet. Anschließend wird der Betätigungspunkt (51b) mit einem Finger nach innen gedrückt, um die Auszieheinheit (1) herauszuziehen.

38. Die Auszieheinheit nach den Ansprüchen 1 und 35, wobei die abgeschrägte Kante der Verriegelungslasche (51a) beim Einsetzen der Auszieheinheit (1) in das Fach der Funktionseinheit ohne weitere Betätigung an der Sperrlasche (92) anliegt und von dieser nach innen gedrückt wird.

39. Die ausziehbare Einheit nach Anspruch 1, wobei die Einsteckverriegelung (110), deren Halterung (115) mittels zweier Schrauben (117) an der Innenseite der rechten Seitenwand (3) der ausziehbaren Einheit (1) befestigt ist, so dass die geschlitzten Rundstifte (111) durch die Öffnungen in der rechten Seitenwand (3) der ausziehbaren Einheit (1) herausragen.

40. Die ausziehbare Einheit nach Anspruch 1 und 39, wobei die Einsteckverriegelung (110), deren Vierkantstift (112) mit der Platte (113) jeweils in eine Vierkantöffnung der Halterung (116) eingesetzt wird, um eine passgenaue Anordnung der Vierkantstifte (112) zu gewährleisten, und mittels einer Schraube, die zickzackförmig in eine der beiden verbleibenden Rundöffnungen (119) der Platte (113) eingeschraubt ist, an der Halterung (116) befestigt wird. Dadurch werden die Vierkantstifte (112) näher beieinander positioniert, um die Anzahl der Kombinationsmöglichkeiten zu erhöhen.

41. Die Auszieheinheit nach Anspruch 1 und 39, wobei die Einschubverriegelung (110), deren Anordnung aus geschlitzten, abgerundeten Stiften (111) an der Auszieheinheit und deren Anordnung aus Vierkantstiften (112) an der Halterung (116) so angeordnet sind, dass eine Anordnung aus geschlitzten, abgerundeten Stiften (111) die entsprechende Anordnung aus Vierkantstiften (112) durchdringen kann.

42. Die Auszieheinheit nach Anspruch 1 und 39, wobei die Einschubverriegelung (110) das Einschieben einer Auszieheinheit in ein falsches Funktionsfach verhindert, bevor diese in der Testposition verriegelt ist.

43. Die Auszieheinheit nach Anspruch 1, wobei die Positionssensorhalterung (100) zur Befestigung eines Positionssensors dient, der ein Signal empfängt, das von der Position der Auszieheinheit im Funktionsfach abhängt.

44. Die Auszieheinheit nach Anspruch 1, wobei das Verriegeln und Entriegeln der Auszieheinheit (1) in der Anschluss- und Testposition sowie die Betätigung der Stoppvorrichtung (70) mittels der Druck- und Halteverriegelung (20) erfolgen.

45. Die Auszieheinheit nach Anspruch 1, wobei sich bei der Druck- und Halteverriegelung (20) standardmäßig der Druckknopf (12), der Verriegelungsstift (21) und der Entriegelungsstift (22) jeweils durch die Federn (26a, 26b und 26c) im entriegelten Zustand befinden, wobei die Federkraft von Feder (26a) größer ist als die von Feder (26b oder 26c).

46. Die Auszieheinheit nach Anspruch 1, wobei sich der Druckknopf (12) und der Verriegelungsstift (21) im entriegelten Zustand befinden, während der Entriegelungsstift (22) gedrückt ist, wenn die Auszieheinheit (1) vollständig aus ihrem Fach entnommen wird.

47. Bei der Auszieheinheit nach den Ansprüchen 1, 3, 7, 15 und 46 wird beim Einsetzen der Auszieheinheit (1) in ihr Fach der Verriegelungsstift (21) durch die konische Lasche (83a) teilweise eingedrückt, freigegeben und in der rechteckigen Vertiefung (83b) verriegelt, während der Entriegelungsstift (22) die konische Vertiefung (84b) an der Entriegelungsplatte (84) erreicht.

48. Bei der Auszieheinheit nach den Ansprüchen 1, 9, 13, 14 und 47 befindet sich der Verriegelungsstift (21) in der rechteckigen Vertiefung (83b) im freigegebenen Zustand und der Entriegelungsstift (22) in der konischen Vertiefung (84b) im eingedrückten Zustand, wenn die Auszieheinheit (1) in der Testposition verriegelt ist. Der Verriegelungsstift (21) und der Entriegelungsstift (22) werden beim Betätigen des Druckknopfes (12) zum Entriegeln der Auszieheinheit in der Testposition eingedrückt bzw. freigegeben.

49. Die ausziehbare Einheit nach den Ansprüchen 1, 9, 13, 14 und 47, wobei sich der Verriegelungsstift (21) im entriegelten Zustand an der rechteckigen Vertiefung (83d) und der Entriegelungsstift (22) im gedrückten Zustand an der konischen Vertiefung (84d) befindet, wenn die ausziehbare Einheit (1) in der verbundenen Position verriegelt ist; wobei der Verriegelungsstift (21) und der Entriegelungsstift (22) jeweils gedrückt bzw. entriegelt werden, wenn der Druckknopf (12) zum Entriegeln der ausziehbaren Einheit in der verbundenen Position gedrückt wird.

50. Die Auszieheinheit nach Anspruch 1, 3, 7, 10, 14 und 15, wobei der Verriegelungsstift (21) und der Druckknopf freigegeben werden, sobald der Druckknopf zum Entriegeln der Auszieheinheit gedrückt wird und diese von der Testposition in die verbundene Position, von der verbundenen Position in die Testposition oder aus der Testposition herausgezogen wird, während der Entriegelungsstift (22) durch die dreieckige Lasche (84c) oder die konische Lasche (84a) gedrückt wird.

51. Die Auszieheinheit nach Anspruch 1, wobei die Auszieheinheit (1) vollständig aus dem Funktionsfach entnommen und wieder eingesetzt wird, während der Druckknopf (12) gedrückt ist, der Verriegelungsstift (21) gedrückt und der Entriegelungsstift (22) freigegeben ist, wobei der freigegebene Stift (22) auf die konische Lasche (84a) trifft und ein weiteres Einschieben der Auszieheinheit (1) in das Funktionsfach verhindert.

52. Die ausziehbare Einheit nach den Ansprüchen 1, 3, 7 und 10, wobei die ausziehbare Einheit (1) in der Testposition oder der verbundenen Position durch Drücken des Druckknopfes (12) entriegelt wird, wodurch die Rückwärtsbewegung des konischen Führungsschlitzes (23d) an der konischen Biegung (23c) der beweglichen Platte (23) den Verriegelungsstift (21) nach innen drückt und die Rückwärtsbewegung des schlüssellochförmigen Schlitzes (23g) an der beweglichen Platte (23) den Abschnitt A (23h) zur Position des Auslösestiftes (22) bewegt, um den Auslösestift (22) zu entriegeln, und dadurch die bewegliche Platte (23) durch die Stufe (22a) des Auslösestiftes (22) gehalten wird, wodurch der Druckknopf federbelastet ist.

53. Eine ausziehbare Einheit (120), die größer als die ausziehbare Einheit (1) nach Anspruch 1 ist und ähnliche Funktionen wie die ausziehbare Einheit (1) nach Anspruch 1 aufweist, umfassend:
a. zwei Druck- und Halteverriegelungen (20) mit zwei Druckknöpfen (121);
b. zwei Verriegelungsstifte (123) und zwei Entriegelungsstifte (124) an der linken und rechten Seitenwand der ausziehbaren Einheit (120);
c. zwei Bediengriffe (122) an der linken und rechten Seite der vorderen Türhalteplatte der ausziehbaren Einheit (120); und
d. einen Satz isolierter oberer Schienen (127) und isolierter unterer Schienen (128) mit jeweils zwei punktgeschweißten Federstahlführungen (129).

54. Die ausziehbare Einheit (120) nach Anspruch 53, wobei die Innenflächen aller Schienen (127 und 128) geprägt sind, um die Reibung zwischen der ausziehbaren Einheit (120) und den Schienen (127 und 128) beim Bewegen der ausziehbaren Einheit (120) zu verringern.

55. Die ausziehbare Einheit (120) nach Anspruch 53, wobei in jeder Schiene (127 oder 128) Öffnungen (131) für austretende Stopfen vorgesehen sind und die Vorderseite jeder Schiene einen vertieften Pfeil (132) aufweist.

56. Die ausziehbare Einheit (120) nach Anspruch 53, wobei der Verriegelungsmechanismus (125) und der Entriegelungsmechanismus (126) an der rechten Seitenwand der ausziehbaren Einheit (120) angeordnet sind.

57. Verfahren zum Einsetzen und Entnehmen einer herausnehmbaren Einheit in ein Funktionsfach einer Niederspannungs-Schalt- oder Steuereinheit nach Anspruch 1, wobei das Verfahren folgende Schritte umfasst:
a. Befestigen der oberen Schiene (80) und der unteren Schiene (81) im Funktionsfach der Niederspannungs-Schalt- oder Steuereinheit mittels Befestigungslöchern (86 und 88), wobei die Anschläge (87) zur Rückseite und die eingeprägten Pfeile zur Vorderseite des Funktionsfachs zeigen. Nach dem Befestigen der beiden Führungsschienen (80 und 81) im Funktionsfach befinden sich die Führungsbuchsen (85 oder 90) mit einer vernieteten, drehbaren Stahlkugel und die Sperrlasche (92) auf der Seite, auf der sich die Druck- und Haltevorrichtung an der herausnehmbaren Einheit (1) befindet;
b. Die Halterung (115) wird mit den vormontierten, geschlitzten Rundstiften (111) der Einsteckverriegelung (110) in einer bestimmten Anordnung von der rechten Innenseite (3) der Auszieheinheit (1) aus befestigt;
c. Die Halterung (116) wird mit den vormontierten Platten (113) und Vierkantstiften (112) der Einsteckverriegelung (110) in einer bestimmten Anordnung befestigt, die nur das Durchdringen der in Schritt b) beschriebenen Anordnung der geschlitzten Rundstifte (111) ermöglicht. Die Halterung wird dabei an einem geeigneten Rahmenelement im Fach der Funktionseinheit befestigt;
d. Die korrekte Auszieheinheit (1) wird in das Fach der Funktionseinheit eingesetzt, während sich der Druckknopf (12), der Verriegelungsstift (21) und der Entriegelungsstift (22) in ihrer Ausgangsstellung befinden, d. h. der Druckknopf (12) ist entriegelt, der Verriegelungsstift (21) ist entriegelt und der Entriegelungsstift (22) ist gedrückt;
e. Einführen der Auszieheinheit (1) in das Fach für die Funktionseinheit bei gedrücktem Druckknopf (12). Die Auszieheinheit (1) kann nur so weit eingeführt werden, bis der Entriegelungsstift (22) auf die konische Lasche (84a) trifft, die ein weiteres Einführen der Auszieheinheit (1) in das Fach für die Funktionseinheit verhindert. Anschließend wird die Auszieheinheit herausgezogen und der Entriegelungsstift (22) mit dem Finger gedrückt, um die Auszieheinheit in die Ausgangsposition zurückzusetzen;
f. Einführen der Auszieheinheit (1) bis zur Testposition. Die Auszieheinheit wird in der Testposition durch den Verriegelungsstift (21) in der rechteckigen Vertiefung (83b) der oberen Schiene (80) verriegelt;
g. Entriegeln der Auszieheinheit durch Drücken des Druckknopfes (12) in der Testposition. Die Auszieheinheit wird in Richtung der verbundenen Position geschoben oder aus der Testposition herausgezogen;
h. Nach Betätigung des Druckknopfes (12) wird beim Einschieben der Auszieheinheit in die Verbindungsposition bzw. beim Herausziehen aus der Testposition der Entriegelungsstift (22) durch die dreieckige Lasche (84c) bzw. die konische Lasche (84a) betätigt. Dadurch werden durch die Vorwärtsbewegung der beweglichen Platte (23) der Verriegelungsstift (21) und der Druckknopf (12) entriegelt;
i. Einschieben der Auszieheinheit (1) bis zur Verbindungsposition. Die Auszieheinheit wird in dieser Position durch den Verriegelungsstift (21) in der rechteckigen Vertiefung (83d) der oberen Schiene (80) verriegelt;
j. Entriegeln der Auszieheinheit durch Drücken des Druckknopfes (12) in der Verbindungsposition. Die Auszieheinheit wird in Richtung der Testposition herausgezogen, bis sie dort verriegelt;
k. Entriegeln Sie die Auszieheinheit (1) in der Testposition durch Drücken des Druckknopfes (12). Ziehen Sie die Auszieheinheit heraus, bis sie durch den Auslösemechanismus (50) einrastet, vorausgesetzt, der Verriegelungsmechanismus (30) ist nicht aktiviert;
l. Drücken Sie den Betätigungspunkt (51b) mit dem Finger nach innen und ziehen Sie die Auszieheinheit (1) aus dem Funktionsfach heraus, sobald sie durch den Auslösemechanismus (50) einrastet.
m. Bei Wartungsarbeiten sind die folgenden Schritte n. bis s. zu befolgen.
n. Entriegeln Sie die Auszieheinheit in der Testposition und ziehen Sie sie heraus, bis der Verriegelungsmechanismus aus dem Funktionsfach austritt;
o. Aktivieren Sie den Verriegelungsmechanismus (30), indem Sie das obere Ende (43) des Aktivierungs-/Deaktivierungsmechanismus (40) leicht nach innen drücken und den Schalter (41) im gebogenen Schlitz (44) nach oben bewegen;
p. Einschieben der Auszieheinheit (1), bis die Verriegelungslasche (31a) die Blockierlasche (92) passiert, wobei die abgeschrägte Kante der Verriegelungslasche (51a) die Blockierlasche (92) berührt und passiert;
q. Herausziehen der Auszieheinheit, bis die Vorderkante der Verriegelungslasche (31a) an der Blockierlasche (92) der unteren Schiene (81) anliegt und stoppt, sodass die Auszieheinheit (1) nicht mehr herausgezogen, aber hineingeschoben werden kann, bis sie in der Testposition einrastet;
r. Verriegeln der herausziehbaren Einheit (1) durch Einführen eines Vorhängeschlosses durch das Verriegelungsloch (36), um die herausziehbare Einheit (1) in der isolierten Verriegelungsposition zu verriegeln, in der die herausziehbare Einheit (1) vollständig von den ein- und ausgehenden Stromkreisen getrennt ist;
s. Nach Abschluss der Wartungsarbeiten wird das Vorhängeschloss entfernt und der Betätigungspunkt (31b) mit dem Finger nach innen gedrückt, um die herausnehmbare Einheit (1) herauszuziehen oder einzusetzen.

## Revendications

1. Un module extractible pour compartiment fonctionnel d'un appareillage de commutation ou de commande basse tension, doté d'un mécanisme de verrouillage à bouton-poussoir en position de test et en position connectée, d'un mécanisme de verrouillage d'isolement pour la maintenance et d'un mécanisme de libération empêchant la chute du module extractible hors du compartiment fonctionnel de l'appareillage, comprenant :
a. un dispositif de verrouillage à pression et maintien (20) fixé sur la paroi latérale droite intérieure (3) et la paroi supérieure intérieure du module extractible (1) à l'aide de supports (25a et 25b), d'une plaque de recouvrement du mécanisme (24) recouvrant le mécanisme, de vis (27a), d'entretoises (27b) et de butées de pression (27c) comprenant:
i. un bouton-poussoir (12) muni d'un ressort (26a),
ii. un axe de verrouillage (21) muni d'une collerette (21a), inséré à travers un ressort (26b), le support (25a) avec une douille de guidage (21b) et la plaque de recouvrement du mécanisme (24), et maintenu par un écrou (21c) permettant à l'axe de verrouillage (21) d'être légèrement précontraint par un ressort,
iii. un axe de déverrouillage (22) muni d'un épaulement (22a), inséré à travers un ressort (26c) et le support (25b) avec une douille de guidage (22b), et maintenu par un écrou (22c) permettant à l'axe de déverrouillage (22) d'être légèrement précontraint par un ressort, et
iv. une plaque mobile (23) présentant un coude conique (23c) avec une rainure de guidage conique (23d), des rainures de guidage (23a et 23b), une fente en forme de trou de serrure (23g) située entre la rainure de guidage conique (23) et la première rainure de guidage (23a), et un coude à angle droit (23e) avec une gâchette (23f);
b. b. Un mécanisme de verrouillage isolé (30) comprenant:
i. un bras de verrouillage (31) muni d'une languette de verrouillage (31a), d'un point de commande (31b), d'une fente (34) et d'une languette d'activation/désactivation (31c). Ce bras de verrouillage (31) est précontraint par un ressort (32), pivotant autour d'un axe (33) et limité par une goupille (35) insérée dans la fente (34),
ii. une découpe (37) pour la languette de verrouillage (31a), une découpe (38) pour le point de commande (31b) et une découpe (39) pour la languette d'activation/désactivation (31c) sur la paroi latérale droite (3) de l'unité extractible (1), et
iii. Mécanisme d'activation/désactivation (40) comprenant un interrupteur (41) fixé à l'intérieur de la paroi latérale droite (3) de l'unité amovible (1) par un rivet (42) et mobile verticalement le long d'une fente incurvée (44), ainsi qu'un demi-poinçon (46) empêchant la chute accidentelle de l'interrupteur (41);
c. Mécanisme de déverrouillage de l'unité (50) comprenant:
i. un bras de verrouillage (51) muni d'une languette de verrouillage (51a), d'un point de commande (51b), d'une fente (55) et d'une languette d'activation/désactivation (31c). Ce bras de verrouillage (31) est précontraint par un ressort (53), pivotant autour d'un axe (54) et limité par une goupille (56) insérée dans la fente (55), et
ii. une découpe (57) pour la languette de verrouillage (51a) et une découpe (58) pour le point de commande (51b) sur la paroi latérale droite (3) de l'unité amovible (1);
d. Un dispositif de verrouillage d'insertion (110) mis en œuvre à l'aide de différentes configurations de goupilles rondes fendues (111) et de goupilles carrées (112) comprend:
i. un support (115) muni de trous taraudés sur lesquels sont fixées les goupilles rondes fendues (111),
ii. une plaque (113) comportant trois trous ronds (119) alignés, sur laquelle sont fixées les goupilles carrées (112) par des contre-écrous (118), et
iii. un support (116) comportant un trou carré et deux trous ronds sur chaque rangée, sur lequel est fixée la plaque (113) munie de la goupille carrée (112) ;
e. e. une poignée de manœuvre (10), un joint (11), une porte avant (13), une plaque de maintien de porte (63) et un joint de collet (62) fixé à la plaque de maintien de porte (63) sur la face avant (2), un support de capteur de position (100) sur sa paroi latérale droite (3), une plaque de montage (60) fixée à l'intérieur de l'unité extractible (1) pour le montage des dispositifs électriques, des découpes (61) pour les fiches et un porte-fiche de commande à ressort (75) sur la face arrière (4) de l'unité extractible (1);
f. un dispositif d'arrêt par gravité (70) qui contrôle le mouvement d'un porte-fiche de commande à ressort (75) muni d'une languette (76), comprenant une butée de fiche de commande (73) s'étendant vers l'arrière de l'unité extractible (1) et présentant un bord inférieur biseauté (74);
g. un rail supérieur (80) présentant des surfaces en relief (97) et des bords longitudinaux (80a et 80b) pliés à angle droit, ainsi qu'un bord longitudinal (83) obtenu par pliage supplémentaire du bord longitudinal (80a), comprenant:
i. une languette conique (83a), des creux rectangulaires (83b et 83d), une languette rectangulaire (83c) entre les deux creux (83b et 83d) et un bord long (83e) sur le bord longitudinal (83),
ii. une plaque de déverrouillage (84) comportant une languette conique (84a), un creux conique (84b), une languette triangulaire (84c) et un creux conique ouvert d'un seul côté (84d), ainsi que des bagues de guidage (85) avec une bille d'acier rotative rivetée sur le bord longitudinal (80a),
iii. des trous de fixation (86) sur les bords longitudinaux (80a et 80b), et
iv. des butées (87) à l'extrémité arrière du rail supérieur (80); et
h. un rail inférieur (81) avec des surfaces en relief (97) et des bords longitudinaux (89a et 89b) pliés à angle droit, comprenant:
i. des bagues de guidage (90) avec une bille d'acier rotative rivetée et une languette de blocage (92) sur le bord longitudinal (89a),
ii. des trous de fixation (88) sur les bords longitudinaux (89a et 89b), et
iii. des butées (91) à l'extrémité arrière du rail inférieur (81).

2. L'unité extractible selon la revendication 1, dans laquelle le joint d'étanchéité (62) fixé à l'arrière de la plaque de maintien de porte (63) sur la face avant (2) de l'unité extractible (1) et le joint (11) assurant l'étanchéité de l'extrémité de la poignée de commande (10) améliorent le degré de protection (indice IP) lorsque l'unité extractible (1) est complètement insérée dans le compartiment de l'unité fonctionnelle.

3. L'unité extractible selon la revendication 1, dans laquelle la plaque mobile (23), fixée intérieurement à la paroi latérale droite (3) de l'unité extractible (1) à l'aide de vis (27a), d'entretoises (27b) et d'un support de pression (27c), est déplacée vers l'arrière à travers les rainures de guidage (23a et 23b) par pression sur le bouton-poussoir (12) et est ramenée vers l'avant par le ressort (26a).

4. L'unité extractible selon les revendications 1 et 3, dans laquelle la plaque mobile (23) est munie d'un bouton-poussoir (12) à une extrémité ; Le coude conique (23c) muni de la rainure de guidage conique (23d) est situé plus près de l'extrémité ; l'autre extrémité présente un coude à angle droit (23e) muni d'une gâchette (23f) actionnant le dispositif d'arrêt (70).

5. L'unité extractible selon les revendications 1 et 3, dans laquelle la plaque mobile (23) comporte des rainures de guidage (23a et 23b), une rainure de guidage conique (23d) et une rainure en forme de trou de serrure (23g) disposées à trois niveaux différents, les rainures de guidage (23a et 23b) étant situées au même niveau.

6. L'unité extractible selon les revendications 1 et 3, dans laquelle la plaque mobile (23) comporte une rainure en forme de trou de serrure (23g) avec une section A (23h) circulaire et une section B (23i) oblongue.

7. L'unité extractible selon la revendication 1, dans laquelle la goupille de verrouillage (21) est légèrement précontrainte par un ressort et peut se déplacer librement lors de son passage à travers le ressort (26b) maintenu entre le support (25a) et la bague (21a), le support (25a) et la douille de guidage (21b), la goupille de verrouillage (21) étant retenue par l'écrou (21c).

8. L'unité extractible selon les revendications 1, 3 et 7, dans laquelle la largeur de la rainure de guidage conique (23d) est légèrement supérieure au diamètre de la tête de la goupille de verrouillage (21) ; et le diamètre de la bague (21a) de la goupille de verrouillage (21) est légèrement supérieur au diamètre de la tête de la goupille de verrouillage (21).

9. L'unité extractible selon les revendications 1, 3 et 7, dans laquelle la goupille de verrouillage (21) est entièrement comprimée par un ressort et est enfoncée lorsque la plaque mobile (23) recule en appuyant sur le bouton-poussoir (12) par rapport à la goupille de verrouillage (21), tandis que la rainure de guidage conique (23d) de la plaque mobile (23) déplace la bague (21a) de la goupille de verrouillage (21) vers l'intérieur.

10. L'unité extractible selon la revendication 1, dans laquelle la goupille de déverrouillage (22) est comprimée par un ressort et se déplace librement lorsqu'elle traverse le ressort (26c) maintenu entre le support (25b) et le palier (22a), le support (25b) et la douille de guidage (22b), la goupille de déverrouillage (22) étant retenue par l'écrou (22c).

11. L'unité extractible selon les revendications 1, 3 et 10, dans laquelle la largeur de la section B (23i) de la fente en forme de trou de serrure (23g) est légèrement supérieure au diamètre de la tête de la goupille de déverrouillage (22) ; le diamètre du épaulement (22a) est légèrement supérieur au diamètre de la tête de la goupille de déverrouillage (22) ; et le diamètre du épaulement (22a) de la goupille de déverrouillage (22) est légèrement inférieur au diamètre de la section A (23h) de la fente en forme de trou de serrure (23g).

12. L'unité extractible selon les revendications 1, 3, 10 et 11, dans laquelle la goupille de déverrouillage (22) est en outre munie d'un ressort et est comprimée lorsque sa tête est insérée dans la section B (23i) de la fente en forme de trou de serrure (23g) de la plaque mobile (23).

13. L'unité extractible selon les revendications 1, 3 et 10, dans laquelle la goupille de déverrouillage (22) est libérée lorsque la plaque mobile (23) recule sous l'effet de la pression sur le bouton-poussoir (12), amenant ainsi la section A (23h) de la fente en forme de trou de serrure (23g) à l'emplacement de la goupille de déverrouillage (22). Ceci permet à l'épaulement (22a) de la goupille de déverrouillage (22) de sortir par la section A (23h) de la fente en forme de trou de serrure (23g) et de maintenir le mouvement de la plaque mobile (23), ce qui a pour effet de comprimer et d'enfoncer le bouton-poussoir (12).

14. L'unité extractible selon les revendications 1, 3, 7 et 10, dans laquelle, lorsque la goupille de déverrouillage (22) est actionnée par la languette triangulaire (84c), la languette conique (84a) ou par tout autre moyen, le palier (22a) se déplace vers l'intérieur, permettant à la plaque mobile (23) d'avancer grâce au ressort (26a). Ainsi, la section B (23i) de la fente en forme de trou de serrure (23g) est amenée à l'emplacement de la goupille de déverrouillage (22) et le palier (22a) repose sur le bord intérieur de la section B (23i) de la fente en forme de trou de serrure (23g). Simultanément, la fente de guidage conique (23d) se déplace vers l'avant par rapport à la goupille de verrouillage (21), ce qui actionne la goupille de déverrouillage (22) et libère la goupille de verrouillage (21) et le bouton-poussoir (12).

15. L'unité extractible selon la revendication 1, dans laquelle la languette conique (83a), les creux rectangulaires (83b et 83d), la languette rectangulaire (83c) et le bord long (83e) sur le bord longitudinal (83) et la plaque de libération (84) comportant une languette conique (84a), le creux conique (84b), la languette triangulaire (84c) et le creux conique ouvert d'un seul côté (84d) et les bagues de guidage (85) avec des billes d'acier rotatives rivetées, sur le bord longitudinal (80a), sont toutes situées du côté où le dispositif de verrouillage à pousser et à maintenir (20) est fixé à l'unité extractible (1).

16. L'unité extractible selon les revendications 1 et 15, dans laquelle les rails (80 et 81) sont marqués de flèches en creux (96) pour identifier leur face avant et comportent des surfaces en relief (97) sur leurs faces intérieures, en contact avec l'unité extractible mobile (1).

17. L'unité extractible selon les revendications 1 et 15, dans laquelle les butées (87) sont situées à l'extrémité arrière des rails (80 et 81) afin d'immobiliser l'unité extractible (1) en cas de défaillance en position connectée.

18. L'unité extractible selon les revendications 1 et 15, dans laquelle les creux (83b et 83d) sont de dimensions identiques, tandis que la hauteur de la languette rectangulaire (83c) est légèrement inférieure à celle du bord long (83e) ou de la languette conique (83a), de sorte que le bord long (83e) et la languette rectangulaire (83c) soient à deux niveaux différents.

19. L'unité extractible selon les revendications 1 et 15, dans laquelle les creux (83b et 83d), la languette (83c) et le bord long (83e) du bord longitudinal (83), ainsi que les creux (84b et 84d) et les languettes (84a et 84c) de la plaque de libération (84), sont formés et fixés de telle sorte que d1 mm soit égal à d2 mm.

20. L'unité extractible selon la revendication 1, dans laquelle le porte-bouchon de commande à ressort (75) est fixé à l'arrière (4) de l'unité extractible et le dispositif d'arrêt (70) est fixé à la paroi latérale droite (3) de l'unité extractible (1) à l'aide de vis (71) insérées à travers des entretoises et des fentes (72), permettant ainsi un déplacement vertical du dispositif d'arrêt (70).

21. L'unité extractible selon les revendications 1 et 20, dans laquelle le dispositif d'arrêt (70), en position basse, sur le bord biseauté de la gâchette (23f), bloque la languette (76) du porte-bouchon de commande à ressort (75), lorsque le bouton-poussoir (12) est relâché ; le dispositif d'arrêt (73) empêche ainsi, par défaut, le mouvement d'avancement du porte-bouchon de commande à ressort (75).

22. L'unité extractible selon les revendications 1 et 21, dans laquelle le dispositif d'arrêt (70), conjointement avec la butée du bouchon de commande (73), se soulève, libérant ainsi la languette (76) du porte-bouchon de commande à ressort (75), lorsque le bouton-poussoir (12) est enfoncé ; et le dispositif d'arrêt (70) redescend lorsque le bouton-poussoir est relâché.

23. L'unité extractible selon les revendications 1 et 22, dans laquelle le bord inférieur biseauté (74) de la butée du bouchon de commande (73) est soulevé au-dessus du niveau de la languette (76) ou repose sur celle-ci, le porte-bouchon de commande à ressort (75) n'est plus bloqué et peut se déplacer librement d'avant en arrière avec le mouvement d'avant en arrière de l'unité extractible (1).

24. L'unité amovible selon les revendications 1 et 21, dans laquelle le porte-fiche de commande à ressort (75) est bloqué par défaut par la butée de fiche de commande (73) en position de test. Le porte-fiche de commande à ressort (75) est alors librement mobile en position de test une fois le bouton-poussoir (12) enfoncé. Entre la position de test et la position connectée, le bouton-poussoir (12) est relâché et le dispositif de butée descend, de sorte que le bord inférieur biseauté (74) de la butée de fiche de commande (73) repose sur la languette (76).

25. L'unité amovible selon les revendications 1, 21 et 24, dans laquelle le porte-fiche de commande (75) atteint sa position la plus avancée vers l'avant lorsque la languette (76) dépasse le bord inférieur biseauté (74) de la butée de fiche de commande (73), en position connectée, lorsque le bouton-poussoir (12) est relâché.

26. L'unité amovible selon les revendications 1, 21 et 25, dans laquelle le porte-fiche de commande (75) se déplace vers l'arrière, soulevant la butée de la fiche de commande (73) par la languette (76) grâce au bord inférieur biseauté (74) qui repose sur cette languette, lorsque l'unité amovible est déverrouillée et déplacée de la position connectée à la position de test.

27. L'unité amovible selon les revendications 1, 21 et 26, dans laquelle la languette (76) dépasse le bord inférieur biseauté (74), permettant ainsi à la butée de la fiche de commande (73) de descendre davantage et de bloquer le porte-fiche de commande à ressort (75) en position de test. Le porte-fiche de commande à ressort (75) atteint alors sa course maximale vers l'arrière, lorsque l'unité amovible est déverrouillée et déplacée de la position connectée à la position de test.

28. L'unité extractible selon la revendication 1, dans laquelle le bras de verrouillage (31) dont le bord arrière de la languette de verrouillage (31a) est conique tandis que le bord avant de la languette de verrouillage (31a) est droit et le point de fonctionnement (31b) comporte un trou de verrouillage (36).

29. L'unité amovible selon les revendications 1 et 28, dans laquelle le bras de verrouillage (31) du mécanisme de verrouillage isolé (30) est fixé à l'unité amovible (1) et muni d'un ressort de manière à ce que la languette de verrouillage (31a), le point de commande (31b) et la languette d'activation/désactivation (31c) sortent respectivement par les découpes (37, 38 et 39).

30. L'unité amovible selon la revendication 1, dans laquelle le mécanisme d'activation/désactivation présente une extrémité coudée avec une extrémité relevée (43) permettant son passage dans la fente incurvée (44) située sur la paroi latérale droite (3) de l'unité amovible (1).

31. L'unité extractible selon les revendications 1 et 30, dans laquelle le mécanisme d'activation/désactivation, actionné par l'interrupteur (41), bloque ou débloque l'accès de la languette d'activation/désactivation (31c) à travers l'ouverture (39) pratiquée dans la paroi latérale droite (3) de l'unité extractible (1), lorsque l'interrupteur (41) est respectivement abaissé ou relevé au maximum ; le mécanisme de verrouillage isolé (30) est ainsi activé ou désactivé.

32. L'unité extractible selon les revendications 1 et 30, dans laquelle l'unité extractible est tirée jusqu'à ce que le bord avant de la languette de verrouillage (31a) du bras de verrouillage (31) bute contre la languette de blocage (92) située sur le rail inférieur (81), lorsque le mécanisme d'activation/désactivation est activé ; à ce stade, le point de commande (31b) est enfoncé par un doigt pour extraire l'unité extractible (1).

33. L'unité amovible selon les revendications 1 et 32, **caractérisée en ce qu'**elle peut être verrouillée par un cadenas inséré dans l'orifice de verrouillage (36) en position de verrouillage isolé lorsque le mécanisme de verrouillage isolé est activé.

34. L'unité amovible selon les revendications 1 et 28, **caractérisée en ce que** le bord biseauté de la languette de verrouillage (31a) vient buter contre la languette de blocage (92) et s'y enfonce automatiquement, sans autre intervention, lors de l'insertion de l'unité amovible (1) dans le compartiment de l'unité fonctionnelle.

35. L'unité extractible selon la revendication 1, dans laquelle le bras de verrouillage (51) du mécanisme de déverrouillage (50) présente un bord arrière biseauté pour la languette de verrouillage (51a) et un bord avant droit.

36. L'unité extractible selon les revendications 1 et 35, dans laquelle le bras de verrouillage (51) du mécanisme de déverrouillage (50) est fixé à l'unité extractible (1) et est muni d'un ressort de sorte que la languette de verrouillage (51a) et le point de commande (51b) émergent respectivement par les découpes (57) et (58).

37. L'unité extractible selon la revendication 1, dans laquelle l'unité extractible (1) est tirée jusqu'à ce que le bord avant de la languette de verrouillage (51a) du bras de verrouillage (51) bute contre la languette de blocage (92) du rail inférieur (81), puis appuie sur le point de commande (51b) pour extraire l'unité extractible (1).

38. L'unité extractible selon les revendications 1 et 35, dans laquelle le bord effilé de la languette de verrouillage (51a) vient buter contre la languette de blocage (92) et y est enfoncé sans autre intervention lors de l'insertion de l'unité extractible (1) dans le compartiment de l'unité fonctionnelle.

39. L'unité extractible selon la revendication 1, dans laquelle le dispositif de verrouillage d'insertion (110), dont le support (115) est fixé à l'intérieur de la paroi latérale droite (3) de l'unité extractible (1) par deux vis (117), de sorte que les ergots arrondis fendus (111) traversent les orifices de la paroi latérale droite (3) de l'unité extractible (1).

40. L'unité amovible selon les revendications 1 et 39, dans laquelle le système de verrouillage d'insertion (110) est constitué de deux goupilles carrées (112) insérées dans des trous carrés du support (113), formant ainsi un agencement cohérent. Ces goupilles sont fixées au support (116) par une vis insérée en zigzag dans l'un des deux trous arrondis (119) restants sur la plaque (113), rapprochant ainsi les goupilles carrées (112) et augmentant le nombre de combinaisons possibles.

41. L'unité extractible des revendications 1 et 39, dans laquelle le verrouillage d'insertion (110) dont la disposition des broches rondes fendues (111) fixées sur l'unité extractible et la disposition des broches carrées (112) fixées sur le support (116) sont disposées de manière à permettre à une disposition de broches rondes fendues (111) de passer à travers la disposition correspondante de broches carrées (112).

42. L'unité amovible selon les revendications 1 et 39, dans laquelle le verrouillage d'insertion (110) empêche l'insertion de l'unité amovible dans un compartiment fonctionnel incorrect avant son verrouillage en position de test.

43. L'unité amovible selon la revendication 1, dans laquelle le support de capteur de position (100) sert à fixer un capteur de position qui reçoit un signal en fonction de la position de l'unité amovible dans le compartiment fonctionnel.

44. L'unité amovible selon la revendication 1, dans laquelle le verrouillage et le déverrouillage de l'unité amovible (1) en position connectée et en position de test, ainsi que le fonctionnement du dispositif d'arrêt (70), sont assurés par le dispositif de verrouillage à pression et maintien (20).

45. L'unité amovible selon la revendication 1, dans laquelle le dispositif de verrouillage à pression et maintien (20) présente, par défaut, le bouton-poussoir (12) et la goupille de verrouillage (21) relâchés. et la goupille de déverrouillage (22) est enfoncée, respectivement par les ressorts (26a, 26b et 26c), la force du ressort (26a) étant supérieure à celle de chacun des ressorts (26b ou 26c).

46. L'unité extractible selon la revendication 1, dans laquelle le bouton-poussoir (12) et la goupille de verrouillage (21) sont relâchés tandis que la goupille de déverrouillage (22) est enfoncée, lorsque l'unité extractible (1) est complètement retirée de son compartiment.

47. L'unité extractible selon les revendications 1, 3, 7, 15 et 46, dans laquelle, lorsque l'unité extractible (1) est insérée dans son compartiment, la goupille de verrouillage (21) est partiellement enfoncée par la languette conique (83a), puis se déverrouille et se verrouille dans l'évidement rectangulaire (83b), tandis que la goupille de déverrouillage (22) atteint l'évidement conique (84b) de la plaque de déverrouillage (84).

48. L'unité extractible selon les revendications 1, 9, 13, 14 et 47, dans laquelle la goupille de verrouillage (21) est relâchée au niveau du creux rectangulaire (83b) et la goupille de déverrouillage (22) est enfoncée au niveau du creux conique (84b), lorsque l'unité extractible (1) est verrouillée en position de test ; la goupille de verrouillage (21) et la goupille de déverrouillage (22) sont respectivement enfoncées et relâchées lorsque le bouton-poussoir (12) est actionné pour déverrouiller l'unité extractible en position de test.

49. L'unité extractible selon les revendications 1, 9, 13, 14 et 47, dans laquelle la goupille de verrouillage (21) est relâchée au niveau du creux rectangulaire (83d) et la goupille de déverrouillage (22) est enfoncée au niveau du creux conique (84d), lorsque l'unité extractible (1) est verrouillée en position connectée. Ainsi, la goupille de verrouillage (21) et la goupille de déverrouillage (22) sont respectivement enfoncées et relâchées lorsque le bouton-poussoir (12) est enfoncé pour déverrouiller l'unité amovible en position connectée.

50. L'unité amovible selon les revendications 1, 3, 7, 10, 14 et 15, dans laquelle la goupille de verrouillage (21) et le bouton-poussoir sont libérés lorsque ce dernier est enfoncé pour déverrouiller l'unité amovible et que celle-ci est déplacée de la position de test à la position connectée, de la position connectée à la position de test, ou retirée de la position de test, lorsque la goupille de déverrouillage (22) est enfoncée par la languette triangulaire (84c) ou la languette conique (84a).

51. L'unité extractible de la revendication 1, dans laquelle l'unité extractible (1) est complètement retirée du compartiment de l'unité fonctionnelle et réinsérée lorsque le bouton-poussoir (12) est enfoncé, la goupille de verrouillage (21) est enfoncée et la goupille de déverrouillage (22) est relâchée, la goupille relâchée (22) heurte la languette conique (84a) et empêche l'unité extractible (1) d'être insérée davantage dans le compartiment de l'unité fonctionnelle.

52. L'unité amovible selon les revendications 1, 3, 7 et 10, dans laquelle l'unité amovible (1) est déverrouillée en position de test ou de connexion par pression sur le bouton-poussoir (12). Le mouvement de recul de la rainure de guidage conique (23d) sur le coude conique (23c) de la plaque mobile (23) appuie alors sur la goupille de verrouillage (21), tandis que le mouvement de recul de la fente en forme de trou de serrure (23g) sur la plaque mobile (23) déplace la section A (23h) jusqu'à l'emplacement de la goupille de déverrouillage (22), libérant ainsi cette dernière. La plaque mobile (23) est alors maintenue par le épaulement (22a) de la goupille de déverrouillage (22), le bouton-poussoir étant ainsi muni d'un ressort.

53. Une unité amovible (120) plus grande que l'unité amovible (1) de la revendication 1, présentant des fonctionnalités similaires, et comprenant:
a. Deux dispositifs de verrouillage à pression et maintien (20) avec deux boutons-poussoirs (121);
b. Deux goupilles de verrouillage (123) et deux goupilles de déverrouillage (124) sur les parois latérales gauche et droite de l'unité amovible (120);
c. Deux poignées de commande (122) sur les côtés gauche et droit de la plaque de maintien de la porte avant de l'unité amovible (120) et
d. Un ensemble de rails supérieurs isolés (127) et de rails inférieurs isolés (128) avec deux supports de guidage en acier à ressort (129) soudés par points sur chaque rail (127 et 128).

54. L'unité amovible (120) selon la revendication 53, dans laquelle les surfaces intérieures de tous les rails (127 et 128) sont gaufrées afin de réduire le frottement généré entre l'unité amovible (120) et les rails (127 et 128) lors du déplacement de l'unité amovible (120).

55. L'unité extractible (120) de la revendication 53, dans laquelle les ouvertures (131) sont conservées dans chaque rail (127 ou 128) pour les bouchons sortants tandis que la face avant de chaque rail comporte une flèche en creux (132).

56. L'unité extractible (120) de la revendication 53, dans laquelle le mécanisme de verrouillage isolé (125) et le mécanisme de libération de l'unité (126) sont conçus sur la paroi latérale droite de l'unité extractible (120).

57. Procédé d'insertion et de retrait d'un élément extractible dans un compartiment fonctionnel d'un appareillage de commutation ou de commande basse tension, selon la revendication 1, ledit procédé comprenant les étapes suivantes :
a. Fixation du rail supérieur (80) et du rail inférieur (81) dans le compartiment fonctionnel de l'appareillage de commutation ou de commande basse tension, à l'aide des trous de fixation (86 et 88), en orientant les butées (87) vers l'arrière du compartiment et les flèches en creux vers l'avant. Une fois les deux rails de guidage (80 et 81) fixés dans le compartiment fonctionnel, les douilles de guidage (85 ou 90) munies d'une bille d'acier rotative rivetée et de la languette de blocage (92) restent du côté où se trouve le dispositif de verrouillage par pression sur l'élément extractible (1);
b. Fixation du support (115) à l'aide des goupilles arrondies fendues pré-fixées (111) du système de verrouillage d'insertion (110), selon une disposition spécifique, depuis la paroi latérale droite intérieure (3) de l'unité extractible (1);
c. Fixation du support (116) à l'aide des plaques pré-fixées (113) et des goupilles carrées (112) du système de verrouillage d'insertion (110), selon une disposition spécifique permettant le passage uniquement à travers la disposition spécifique des goupilles arrondies fendues (111) de l'étape b. ci-dessus, le support étant ainsi fixé à un élément de châssis approprié dans le compartiment de l'unité fonctionnelle;
d. Insertion de l'unité extractible (1) dans le compartiment de l'unité fonctionnelle, le bouton-poussoir (12), la goupille de verrouillage (21) et la goupille de déverrouillage (22) étant dans leur position par défaut : bouton-poussoir (12) relâché, goupille de verrouillage (21) relâchée et goupille de déverrouillage (22) enfoncée;
e. Insérer l'unité amovible (1) dans le compartiment de l'unité fonctionnelle tout en maintenant enfoncé le bouton-poussoir (12). L'unité amovible (1) ne peut être insérée que jusqu'à ce que la goupille de déverrouillage (22) bute contre la languette conique (84a), empêchant ainsi toute insertion supplémentaire. Retirer ensuite l'unité amovible et appuyer sur la goupille de déverrouillage (22) pour la ramener à sa position initiale;
f. Insérer l'unité amovible (1) jusqu'à la position de test. L'unité est alors verrouillée dans cette position par la goupille de verrouillage (21) logée dans l'encoche rectangulaire (83b) du rail supérieur (80);
g. Déverrouiller l'unité amovible en appuyant sur le bouton-poussoir (12) en position de test. L'unité est alors poussée vers la position connectée ou retirée de la position de test ;
h. Après avoir appuyé sur le bouton-poussoir (12), lorsque l'unité amovible est insérée en position connectée ou retirée de la position de test, la goupille de déverrouillage (22) est actionnée respectivement par la languette triangulaire (84c) ou la languette conique (84a), ce qui entraîne le déplacement vers l'avant de la plaque mobile (23) et le déverrouillage de la goupille de verrouillage (21) et du bouton-poussoir (12);
i. Insérer l'unité amovible (1) jusqu'à la position connectée, où elle se verrouille grâce à la goupille de verrouillage (21) logée dans l'encoche rectangulaire (83d) du rail supérieur (80);
j. Déverrouiller l'unité amovible en appuyant sur le bouton-poussoir (12) en position connectée, puis tirer l'unité vers la position de test jusqu'à son verrouillage;
k. Déverrouiller l'unité amovible (1) en position de test en appuyant sur le bouton-poussoir (12), puis tirer l'unité jusqu'à son verrouillage par le mécanisme de déverrouillage (50), à condition que le mécanisme de verrouillage d'isolement (30) n'ait pas été activé;
l. Appuyer sur le point de commande (51b) avec un doigt et extraire l'unité amovible (1) de son compartiment lorsqu'elle est verrouillée par le mécanisme de déverrouillage (50).
m. En cas de maintenance, suivre les étapes n. à s. ci-dessous.
n. Déverrouiller l'unité amovible en position de test et la tirer jusqu'à ce que le mécanisme de verrouillage d'isolement sorte du compartiment de l'unité fonctionnelle;
o. Activer le mécanisme de verrouillage d'isolement (30) en appuyant légèrement sur l'extrémité surélevée (43) du mécanisme d'activation/désactivation (40) et en déplaçant l'interrupteur (41) vers le haut dans la fente incurvée (44);
p. Insérer l'unité amovible (1) jusqu'à ce que la languette de verrouillage (31a) dépasse la languette de blocage (92), le bord effilé de la languette de verrouillage (51a) heurtant et dépassant la languette de blocage (92);
q. Tirer l'unité amovible jusqu'à ce que le bord avant de la languette de verrouillage (31a) bute contre la languette de blocage (92) du rail inférieur (81), empêchant ainsi son extraction. L'unité amovible (1) peut alors être poussée jusqu'à son verrouillage en position de test;
r. Verrouiller l'unité amovible (1) à l'aide d'un cadenas inséré dans l'orifice de verrouillage (36), la mettant ainsi en position d'isolement et totalement déconnectée des circuits d'entrée et de sortie;
s. Une fois la maintenance terminée, retirer le cadenas et appuyer sur le point de commande (31b) pour extraire ou insérer l'unité amovible (1).
